(19) **Europäisches Patentamt / European Patent Office / Office européen des brevets**

(11) **EP 4 756 703 A1**

(12) **EUROPEAN PATENT APPLICATION**
published in accordance with Art. 153(4) EPC

(43) Date of publication:
**10.06.2026 Bulletin 2026/24**

(21) Application number: **24854449.6**

(22) Date of filing: **13.08.2024**

(51) International Patent Classification (IPC):
$G06T\ 3/18$ (2024.01)   $G06T\ 7/73$ (2017.01)
$G06T\ 3/40$ (2024.01)   $G06T\ 3/14$ (2024.01)

(52) Cooperative Patent Classification (CPC):
**G06T 3/00; G06T 3/14; G06T 3/18; G06T 3/40;
G06T 7/73**

(86) International application number:
**PCT/KR2024/012046**

(87) International publication number:
**WO 2025/037898 (20.02.2025 Gazette 2025/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.08.2023 KR 20230107074**

(71) Applicant: **Samsung Electronics Co., Ltd.
Suwon-si, Gyeonggi-do 16677 (KR)**

(72) Inventor: **WON, Kwanghyun
Suwon-si, Gyeonggi-do 16677 (KR)**

(74) Representative: **Gulde & Partner
Patent- und Rechtsanwaltskanzlei mbB
Berliner Freiheit 2
10785 Berlin (DE)**

(54) **METHOD AND ELECTRONIC DEVICE FOR GENERATING PREDISTORTED IMAGE BY USING LOOKUP TABLE**

(57)   A method performed by an electronic device may include identifying a value of a scaling parameter associated with an image output size, calculating coordinates of a second pixel corresponding to coordinates of a first pixel based on the value of the scaling parameter, calculating a vector corresponding to the first pixel based on the coordinates of the first pixel and the coordinates of the second pixel, and generating a look-up table based on the calculated vector.

FIG. 4

LOOK-UP TABLE (432)

| (s, t) | 0 | 1 | ⋯ | W−1 |
|---|---|---|---|---|
| 0 | $(s_{0,0}, t_{0,0})$ | $(s_{1,0}, t_{1,0})$ | ⋯ | $(s_{W-1,0}, t_{W-1,0})$ |
| 1 | $(s_{0,1}, t_{0,1})$ | $(s_{1,1}, t_{1,1})$ | ⋯ | $(s_{W-1,1}, t_{W-1,1})$ |
| ⋯ | ⋯ | ⋯ | ⋯ | ⋯ |
| H−1 | $(s_{0,H-1}, t_{0,H-1})$ | $(s_{1,H-1}, t_{1,H-1})$ | ⋯ | $(s_{W-1,H-1}, t_{W-1,H-1})$ |

EP 4 756 703 A1

## Description

### Technical Field

The present disclosure relates to a method and an electronic device for generating a predistorted image by using a look-up table.

### Background Art

Three-dimensional (3D) image display technology has been applied to various fields, and recently, has also been applied to video devices related to virtual reality (VR) and augmented reality (AR). As a video device that provides VR and AR, a magnifying optical device may be used.

The VR device may be implemented as a wearable device such as glasses type, head mount type, and goggle type, or as a non-wearable device. In the case of wearable devices, a user wears and uses the wearable device, and thus, a position of the user with respect to the wearable device may be fixed. That is, a relative position (e.g., distance or angle) between hardware (e.g., display or lens) that outputs an image on the wearable device and the user's view may be fixed. On the other hand, for non-wearable devices, the position of the user with respect to the wearable device may not be fixed. That is, a relative position (e.g., distance or angle) between hardware (e.g., display or lens) that outputs an image on the non-wearable device and the user's view may not be fixed.

### Disclosure of Invention

### Solution to Problem

The present disclosure may be implemented in various ways including as a method, system, device, or computer program stored on a computer-readable storage medium.

According to an embodiment of the present disclosure, a method performed by an electronic device may include identifying a target image including a plurality of pixels. According to an embodiment of the present disclosure, the method may include identifying coordinates of a second pixel corresponding to coordinates of a first pixel by using a target look-up table generated based on a scaling parameter associated with an image output size. According to an embodiment of the present disclosure, the method may include generating a predistorted image based on data of the first pixel of the target image and coordinates of the second pixel. According to an embodiment of the present disclosure, the method may include outputting the predistorted image. According to an embodiment of the present disclosure, data of the second pixel in the predistorted image may be determined based on data of the first pixel in the target image.

According to an embodiment of the present disclosure, a method performed by the electronic device may include identifying a value of a scaling parameter associated with an image output size. According to an embodiment of the present disclosure, the method may include calculating the coordinates of the second pixel corresponding to the coordinates of the first pixel based on the value of the scaling parameter. According to an embodiment of the present disclosure, the method may include calculating a vector corresponding to the first pixel based on the coordinates of the first pixel and the coordinates of the second pixel. According to an embodiment of the present disclosure, the method may include generating a look-up table for generating a predistorted image for a target image based on the calculated vector.

According to an embodiment of the present disclosure, an electronic device may include memory storing one or more instructions and at least one processor configured to execute the one or more instructions stored in the memory. According to an embodiment of the present disclosure, the at least one processor may be configured to execute the one or more instructions to cause the electronic device to identify a target image including a plurality of pixels. According to an embodiment of the present disclosure, the at least one processor may be configured to execute the one or more instructions to cause the electronic device to identify coordinates of a second pixel corresponding to coordinates of a first pixel by using a target look-up table generated based on a scaling parameter associated with an image output size. According to an embodiment of the present disclosure, the at least one processor may be configured to execute the one or more instructions to cause the electronic device to generate a predistorted image based on data of the first pixel of the target image and the coordinates of the second pixel. According to an embodiment of the present disclosure, the at least one processor may be configured to execute the one or more instructions to cause the electronic device to output the predistorted image. According to an embodiment of the present disclosure, data of the second pixel in the predistorted image may be determined based on data of the first pixel in the target image.

According to an embodiment of the present disclosure, the electronic device may include memory storing one or more instructions and at least one processor configured to execute the one or more instructions stored in the memory. According to an embodiment of the present disclosure, the at least one processor may be configured to execute the one or more instructions to cause the electronic device to identify a value of a scaling parameter associated with an image output size. According to an embodiment of the present disclosure, the at least one processor may be configured to execute the one or more instructions to cause the electronic device to calculate the coordinates of the second pixel corresponding to the coordinates of the first pixel based on the value of the scaling parameter. According to an embodiment of the present disclosure, the at least one processor may be configured to execute the one or more instructions to cause the electronic device to calculate a vector corresponding to the first pixel based on the coordinates of the first pixel and the coordinates of the second pixel. According to an embodiment of the present disclosure, the at least one processor may be configured to execute the one or more instructions to cause the electronic device to generate a look-up table for generating a predistorted image for a target image based on the calculated vector.

**Brief Description of Drawings**

FIG. 1A is a diagram showing an example of distortion that occurs when an image is output by an electronic device according to an embodiment of the present disclosure.
FIG. 1B is a diagram showing an example of distortion that occurs when an image is output by an electronic device according to an embodiment of the present disclosure.
FIG. 1C is a diagram showing an example of distortion that occurs when an image is output by an electronic device according to an embodiment of the present disclosure.
FIG. 2 is a diagram showing an example of a method of generating a predistorted image according to an embodiment of the present disclosure.
FIG. 3 is a diagram showing an example of generation of a predistorted image according to an embodiment of the present disclosure.
FIG. 4 is a diagram showing an example of a method of generating a predistorted image by using a look-up table according to an embodiment of the present disclosure.
FIG. 5 is a diagram illustrating an example of determining values of one or more parameters according to an embodiment of the present disclosure.
FIG. 6 is a diagram illustrating an example of generating a look-up table according to an embodiment of the present disclosure.
FIG. 7 is a diagram showing an example of generating a predistorted image by using a look-up table according to an embodiment of the present disclosure.
FIG. 8 is a diagram showing an example of generating a predistorted image by using a user's viewing position according to an embodiment of the present disclosure.
FIG. 9 is a flowchart of a method of generating a predistorted image by using a look-up table by an electronic device according to an embodiment of the present disclosure.
FIG. 10 is a flowchart of a method of generating a look-up table by an electronic device according to an embodiment of the present disclosure.
FIG. 11 is a block diagram illustrating an example of an electronic device for generating a look-up table and an electronic device for generating a predistorted image according to an embodiment of the present disclosure.

**Mode for the Invention**

The present disclosure may have various modifications and embodiments, and thus certain embodiments are illustrated in the drawings and described in detail through the detailed description. However, this is not intended to limit the embodiments of the present disclosure, and it needs to be understood that the present disclosure includes all modifications, equivalents, and alternatives included in the spirit and technical scope of the various embodiments.
In describing the embodiments, when it is determined that a detailed description of a related known technology may unnecessarily obscure the gist of the present disclosure, the detailed description is omitted. Numbers used in the description of the specification (e.g., first, or second) are merely identifiers to distinguish one component from another. Unless the context clearly indicates otherwise, the singular forms "a", "an", and "the" may be understood to include plural objects.
It should be understood that combinations of blocks in each flowchart and flowcharts may be performed by one or more computer programs including computer-executable instructions. One or more computer programs may be stored entirely in a single memory, or may be split across multiple different memories.
Any function or operation described in the specification may be performed by a single processor or a combination of processors. A processor or a combination of processors is a circuitry that performs processing, and may include a circuitry such as an application processor (AP), communication processor (CP), graphical processing unit (GPU), neural processing unit (NPU), microprocessor unit (MPU), System on Chip (SoC), or integrated chip (IC).

Hereinafter, with reference to the attached drawings, an embodiment of the present disclosure is described in detail such that those of skill in the art to which the present disclosure pertains may easily implement the present disclosure. However, the present disclosure may be implemented in many different forms and is not limited to the embodiments described herein. Prior to a detailed description of the present disclosure, the terms used in this specification may be defined or understood as follows.

When a component is referred to in this specification as being 'connected' to another component or 'connected' to another component, it should be understood that the component may be directly connected to or connected to the other component, but unless there is a specific description to the contrary, it should also be understood that the component may be connected or connected via another component therebetween. The 'connection' may mean wireless connection or a wired connection.

In addition, in this specification, components expressed as '~ unit', 'module', and the like may be two or more components combined into one component, or one component may be divided into two or more components according to more detailed functions. Each component described below may additionally perform some or all of the functions performed by other components in addition to its own main function, and some of the main functions performed by each component may be performed exclusively by other components.

In the present disclosure, the expression "at least one of a, b or c" may refer to "a", "b", "c", "a and b", "a and c", "b and c", "all of a, b and c", or variations thereof.

In the present disclosure, the 'image size' may mean, but is not limited to, a size on a pixel-by-pixel basis. The 'image resolution' may mean, but is not limited to, the number of pixels contained in an image. According to an embodiment, the image size on a pixel-by-pixel basis may be used interchangeably with the resolution of the image. In the present disclosure, the 'resolution of a look-up table' may mean, but is not limited to, the number of matrix elements of the look-up table. The 'size of the look-up table' may mean, but is not limited to, the size of the look-up table in units of matrix elements. According to an embodiment, the size of the look-up table in units of matrix elements may be used interchangeably with the resolution of the look-up table.

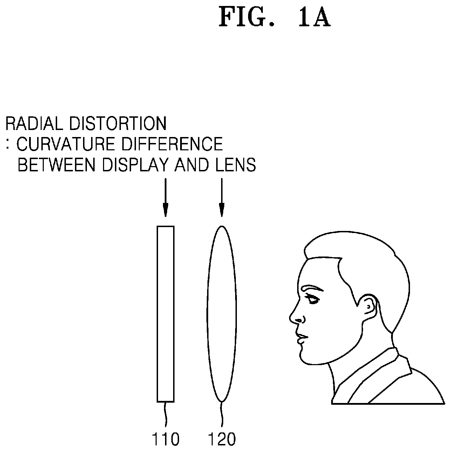

FIGS. 1A to 1C are diagrams showing examples of distortion that occurs when an image is output by an electronic device according to an embodiment of the present disclosure.

A display 110 and a lens 120 illustrated in FIGS. 1A to 1C may be components of the electronic device and may be included in the electronic device. According to an embodiment of the present disclosure, the electronic device may be a magnifying optical electronic device and may provide virtual reality (VR), augmented reality (AR), mixed reality (MR), extended reality (XR), substitutional reality (SR), and the like. For example, the magnifying optical electronic device may include a wearable magnifying optical device and a non-wearable magnifying optical device (e.g., virtual screen).

FIG. 1A is a diagram showing radial distortion due to a curvature difference between the display 110 and the lens 120. Radial distortion may include negative radial distortion, i.e. pincushion-type distortion. Radial distortion may include positive radial distortion, i.e. barrel-type distortion. According to an embodiment, the electronic device may apply predistortion to a target image to be output to compensate for distortion due to a curvature difference between the display 110 and the lens 120. For example, the electronic device may apply predistortion to the target image to be output by using one or more radial distortion parameters (e.g., $k_1$, $k_2$, and $k_3$).

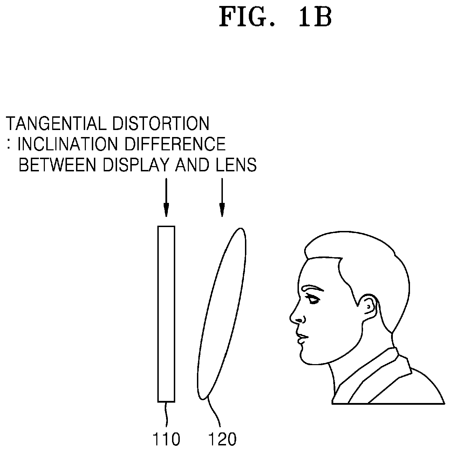

FIG. 1B is a diagram showing tangential distortion due to an inclination difference between the display 110 and the lens 120. According to an embodiment, the electronic device may apply predistortion to the target image to be output to compensate for distortion due to an inclination difference between the display 110 and the lens 120. For example, the electronic device may apply predistortion to the target image to be output by using one or more tangential distortion parameters (e.g., $p_1$ and $p_2$).

According to an embodiment, the electronic device may apply predistortion to the target image to be output to compensate for radial distortion and tangential distortion. For example, the electronic device may apply predistortion to the target image to be output by using the Brown-Conrady distortion model (Expression 1 below).

## Expression 1

$$u = u(x)_{radial} + u(x)_{tangential}$$

$$v = v(y)_{radial} + v(y)_{tangential}$$

$$u(x)_{radial} = x(1 + k_1 r^2 +, k_2 r^4 + k_3 r^6)$$

$$v(y)_{radial} = y(1 + k_1 r^2 +, k_2 r^4 + k_3 r^6)$$

$$u(x)_{tangential} = 2p_1 xy + p_2(r^2 + 2x^2)$$

$$v(y)_{tangential} = 2p_2 xy + p_1(r^2 + 2y^2)$$

$$r^2 = x^2 + y^2$$

In Expression 1 above, x and y may represent pixel locations (e.g., components of pixel coordinates) in the target image, u and v may represent values for pixel locations (e.g., components of pixel coordinates) to which predistortion is applied, $k_1$, $k_2$, and $k_3$ may represent radial distortion parameters, and $p_1$ and $p_2$ may represent tangential distortion parameters. For example, u and v may represent values that may derive pixel locations (or pixel coordinates) to which predistortion is applied.

The electronic device may provide an output image without radial distortion and tangential distortion (or with reduced radial distortion and tangential distortion) by outputting an image with applied predistortion to the display 110.

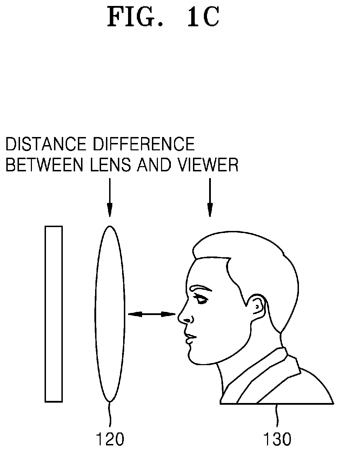

FIG. 1C is a diagram showing distortion due to a distance difference between the lens 120 and a user 130 (i.e., the user's view and eyes). A distance between the lens 120 and the user 130 may refer to a distance between the lens 120 and a viewing position. Unlike a wearable device in which the distance between the lens 120 and the user 130 is fixed, in the case of a non-wearable magnifying optical device, the distance between the lens 120 and the user 130 may vary depending on the position and movement of the user 130. For example, when the distance between the lens 120 and the user 130 increases, a phenomenon may occur in which a partial area of the image is cropped and not visible to the user 130. That is, when the distance between the lens 120 and the user 130 is greater than a reference distance (or optimal distance), distortion occurs in which an outer area of the image is cropped and is not visible to the user 130.

According to an embodiment, the electronic device may apply predistortion to the target image to be output to compensate for distortion due to the distance between the lens 120 and the user 130. For example, the electronic device may downscale the size of the target image to be output to compensate for distortion in which the outer area of the image appears to be cropped when the distance between the lens 120 and the user 130 increases. For example, the electronic device may upscale the size of the target image to be output when the distance between the lens 120 and the user 130 decreases.

According to an embodiment, the electronic device may apply predistortion to the target image to be output to compensate for distortion due to the distance between the lens 120 and the user 130 (i.e., viewing position), radial distortion, and tangential distortion. For example, the electronic device may apply predistortion to the target image to be output by using a distortion model based on Expression 2.

Expression 2

$$u' = round(m \times (u(x)_{radial} + u(x)_{tangential}))$$

$$v' = round(n \times (v(y)_{radial} + v(y)_{tangential}))$$

$$u(x)_{radial} = x(1 + k_1 r^2 +, k_2 r^4 + k_3 r^6)$$

$$v(y)_{radial} = y(1 + k_1 r^2 +, k_2 r^4 + k_3 r^6)$$

$$u(x)_{tangential} = 2p_1 xy + p_2(r^2 + 2x^2)$$

$$v(y)_{tangential} = 2p_2 xy + p_1(r^2 + 2y^2)$$

$$r^2 = x^2 + y^2$$

In Expression 2 above, x and y may represent pixel locations (e.g., components of pixel coordinates) in the target image, u' and v' may represent pixel locations (e.g., components of pixel coordinates) to which predistortion is applied, $k_1$, $k_2$, and $k_3$ may represent radial distortion parameters, $p_1$ and $p_2$ may represent tangential distortion parameters, and m and n may represent scaling parameters. For example, the scaling parameter may be a parameter for adjusting the size of an output image. In Expression 2 above, the round function may represent any function (e.g., rounding function, up function, or down function) that causes u' and v' to be calculated as integer values. Values of the parameters may be applied equally to a plurality of pixels of the target image, but are not limited thereto. For example, the values of parameters for at least some pixels of the target image may be different from the values of parameters for other pixels of the target image.

FIGS. 1A to 1C illustrate the display 110 and the lens 120 of the electronic device, but the present disclosure is not limited thereto. For example, the electronic device may include a display, a curved mirror, and a beam-splitter. The location and structure of each component of the electronic device are not limited to those shown in FIGS. 1A to 1C.

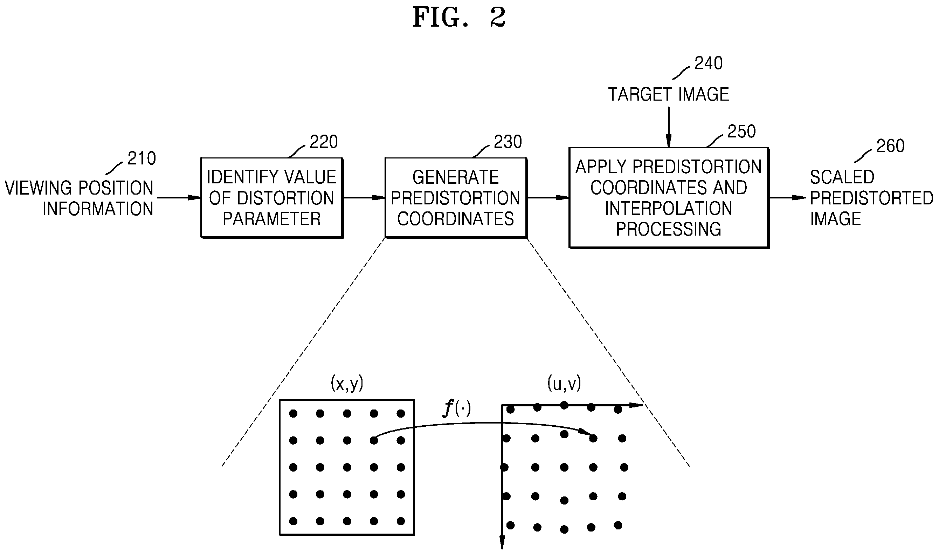

FIG. 2 is a diagram showing an example of a method of generating a predistorted image according to an embodiment of the present disclosure.

An electronic device may generate a predistorted image to correct/compensate for distortion that appears when outputting an image. When the electronic device outputs an original image without change, distortion may occur due to a hardware and/or software structure, a condition, an environment, and the like. In this case, even when the electronic device outputs the complete original image on a display, the image that is actually perceived by the user's view through a lens and the like may be a distorted image.

To compensate for this, the electronic device may generate and output a predistorted image obtained by transforming the original image in consideration of distortion that may occur. For example, the electronic device may generate the predistorted image by applying to the original image an opposite distortion to the distortion to be applied to the original image. In this case, even when the electronic device outputs the predistorted image on the display, the image that is actually perceived by the user's view through a lens and the like may be an image without distortion (or reduced distortion).

Referring to FIG. 2, the electronic device may identify values of one or more distortion parameters (220). The one or more distortion parameters may include, but are not limited to, a radial distortion parameter and a tangential distortion parameter. According to an embodiment, the electronic device may obtain the values of one or more distortion parameters. According to an embodiment, the electronic device may determine the values of one or more distortion parameters. For example, the value of at least one distortion parameter may be determined based on a hardware and/or software structure, a condition, an environment, and the like. For example, the value of at least one distortion parameter may be determined based on viewing position information 210.

The viewing position information 210 may include information on the upper, lower, left, and right positions of the user's view (or eyes) with respect to an image output device, and information on a viewing angle with respect to the image output device. The image output device may be included in an input/output device of an electronic device that outputs a predistorted image. For example, the image output device may include a display and a lens, and the viewing position information 210 may mean, but is not limited to, the position of the user's view with respect to the lens of the image output device.

The electronic device may generate predistortion coordinates based on the identified values of distortion parameters (230). For example, the electronic device may generate predistortion coordinates (u, v) by using Expression 1 above based on the identified values of radial distortion parameter and the values of the tangential distortion parameter. A function f(·) of FIG. 2 may be a function based on Expression 1 above, and the predistortion coordinates (u, v) may be normalized values ranging from 0 to 1. That is, the predistortion coordinates may be non-integer values.

The electronic device may identify a target image 240 to be output on the display (i.e., a predistorted target image). For example, the target image 240 may be an original image. According to an embodiment, the electronic device may obtain the target image 240. For example, the electronic device may receive the target image 240 from another electronic device. For example, the electronic device may identify the target image 240 input through an input device. For example, the electronic device may generate the target image 240.

The electronic device may generate a scaled predistorted image 260 by applying predistortion coordinates to the target image 240 and performing interpolation processing (250). According to an embodiment, the electronic device may generate a predistorted image without loss of image quality by applying the predistortion coordinates to the target image 240. The predistorted image without loss of image quality may be an image obtained without considering the size of a display (or resolution) and may have a larger size (or higher resolution) than the size of the display (or resolution). In this case, the predistorted image without loss of image quality (i.e., an image generated by applying predistortion coordinates to the target image 240) may not be directly output to the display, or even when the predistorted image without loss of image quality is directly output to the display, a phenomenon may occur in which a partial area exceeding the size of the display (or resolution) is not output (e.g., cropping phenomenon).

Therefore, to generate an image to be output on the display without a phenomenon in which a partial area of the image is not output, the electronic device may perform interpolation processing on the predistorted image generated by applying predistortion coordinates to the target image 240. For example, the electronic device may generate the scaled predistorted image 260 by scaling (e.g., downscaling) the predistorted image to a size (or resolution) less than or equal to the size of the display (or resolution). The electronic device may use any interpolation operation, method, or algorithm to perform an interpolation operation.

The electronic device may output the scaled predistorted image 260 on the display of the image output device (e.g., a virtual screen). The image output device may be included in an output device as a component of the electronic device that generates the scaled predistorted image 260. For example, the image output device may be a device connected to or communicable with the electronic device that generates the scaled predistorted image 260. The image output device may include, but is not limited to, a display and a lens. By distorting the scaled predistorted image 260 output on the display again by a lens or the like, an image without distortion (or with less distortion) may be provided to the user's view.

When the method illustrated in FIG. 2 is applied to a video including a plurality of image frames rather than one image, a rather long processing time may be required. For example, to generate a predistorted image by applying predistortion to the video including a plurality of image frames, the electronic device needs to apply predistortion coordinates to each of the plurality of image frames and perform interpolation processing. That is, the electronic device needs to perform interpolation processing on each image frame, and thus it may take a relatively long time to generate the predistorted image, which may result in latency.

In the description of FIG. 2 described above, the operations illustrated in FIG. 2 are described as being performed by one electronic device, but are not limited thereto. According to an embodiment, the operations illustrated in FIG. 2 may be performed by a plurality of electronic devices. For example, a first electronic device may identify values of one or more distortion parameters, generate predistortion coordinates, and provide the generated predistortion coordinates to a second electronic device. The second electronic device may generate the predistorted image and/or the scaled predistorted image 260 from the target image 240 by using the provided predistortion coordinates.

The operations performed by the electronic device to generate the scaled predistorted image 260 are not limited to those illustrated in FIG. 2. According to an embodiment, the electronic device may further perform any processing operations omitted in FIG. 2 to generate the scaled predistorted image 260. For example, to apply the predistortion coordinates to the target image 240 (e.g., a target image with a resolution of 3840x2160), the electronic device may perform black pixel padding processing on the target image 240, thereby generating a padding image (e.g., a padding image with a resolution of (3840+b)x(2160+a)) obtained by adding a border area of a black pixel (e.g., zero pixel or zero data pixel) to the target image 240. In this case, the electronic device may generate a predistorted image by applying predistortion coordinates to the padding image.

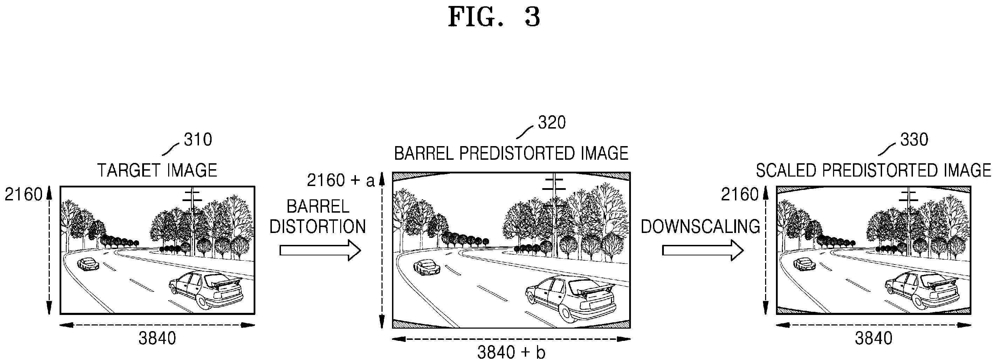

FIG. 3 is a diagram showing an example of generation of a predistorted image according to an embodiment of the present disclosure.

FIG. 3 shows an example of an operation (i.e., 250 of FIG. 2) in which an electronic device applies predistortion coordinates to a target image and performs interpolation processing in the method of generating the predistorted image described above with reference to FIG. 2. Referring to FIG. 3, the electronic device may apply the predistortion coordinates to a target image 310 having a resolution (or size) of 3840x2160 (i.e., 4 k). For example, as illustrated in FIG. 3, the electronic device may generate a barrel predistorted image 320 by applying barrel predistortion coordinates to the target image 310. The barrel predistorted image 320 may be generated with a resolution (or size) of (3840+b)x(2160+a). That is, the barrel predistorted image 320 may be a predistorted image without loss of image quality and generated with a higher resolution (or larger resolution) than the resolution of the target image 310.

The barrel predistorted image 320 with a resolution of (3840+b)x(2160+a) may not be output on a display with a resolution (or size) of 3840x2160, or even when output, a partial area of the barrel predistorted image 320 exceeding the resolution (or size) of 3840x2160 is not output, and an image with a cropped area may be output on the display. Therefore, the electronic device may downscale the barrel predistorted image 320 to a display resolution (or size) (i.e., 3840x2160) to output a complete image without any cropped area. According to an embodiment, the electronic device may generate a predistorted image 330 scaled to a resolution (or size) of 3840x2160 by performing interpolation processing on the barrel predistorted image 320.

Although FIG. 3 illustrates the target image 310 having a resolution (or size) of 3840x2160, the resolution (or size) of the target image is not limited to 3840x2160, and the target image may have a higher resolution (or larger size) or, conversely, a lower resolution (or smaller size). FIG. 3 illustrates an example in which the electronic device scales a predistorted image 320 to an image of a resolution (or size) of 3840x2160, but is not limited thereto. For example, the electronic device may upscale/downscale the predistorted image 320 to any resolution (or size) in consideration of the resolution (or size) of the display.

As described above with reference to FIGS. 2 and 3, when a predistorted image without loss of image quality is generated by applying predistortion coordinates determined based on radial distortion parameters and/or tangential distortion parameters and then scaling is performed, the electronic device may output an image without a staircase phenomenon occurring at an image border, i.e., an image without image degradation. However, due to the interpolation process for scaling, it may take a long time to process a single target image and output the target image on the display. For example, processing a single image with a resolution of 3840x2160 may take about 3.17 seconds, while processing a video including 50 image frames may take about 159.97 seconds. Therefore, when processing a video including a large number of image frames, it may take more time, which may cause latency and make it difficult to output the image immediately.

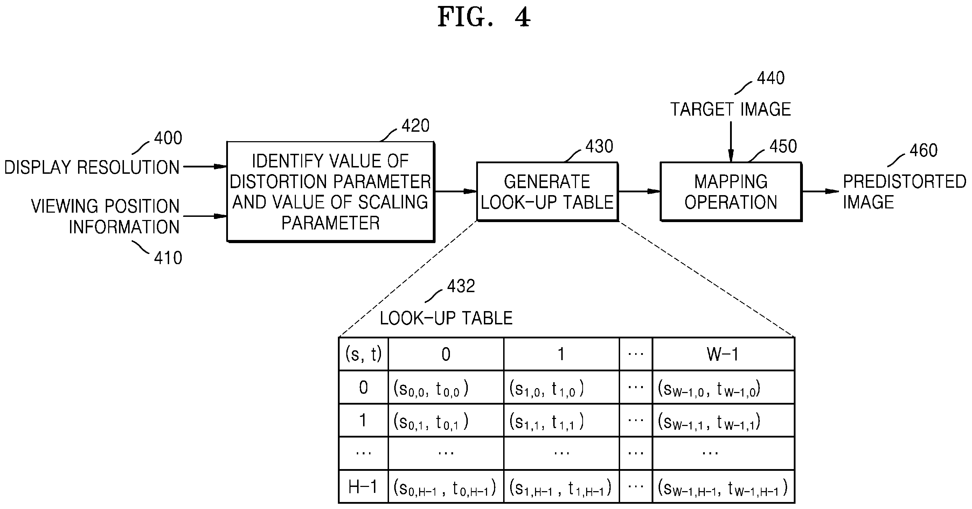

FIG. 4 is a diagram showing an example of a method of generating a predistorted image by using a look-up table according to an embodiment of the present disclosure.

In the detailed description of FIG. 4, a repeated description of FIG. 2 may be omitted. FIG. 4 may show an example of an image processing method for compensating for lens distortion with low complexity according to an embodiment of the present disclosure. Referring to FIG. 4, the electronic device may identify values of one or more distortion parameters and values of one or more scaling parameters (420). According to an embodiment, the electronic device may obtain the values of one or more scaling parameters. According to an embodiment, the electronic device may determine the values of one or more scaling parameters. For example, one or more scaling parameters may include m and n of Expression 2 above. Based on Expressions 1 and 2 above, u' may be calculated by multiplying u in Expression 1 above by the scaling parameter m, and v' may be calculated by multiplying v in Expression 1 above by the scaling parameter n.

According to an embodiment, the electronic device may determine the values of one or more scaling parameters based on a display resolution 400 (or size). For example, the electronic device may determine the scaling parameter m based on a horizontal resolution value of the display (e.g., 3840) and determine the scaling parameter n based on a vertical resolution value of the display (e.g., 2160). The scaling parameter may cause the predistorted image to be generated at a lower resolution (or smaller size) than the display resolution 400 (or size). Therefore, the electronic device may output the predistorted image generated based on the scaling parameter on the display without additional scaling processing.

According to an embodiment, the electronic device may determine the values of one or more scaling parameters based on viewing position information 410. The viewing position information 410 may include information on the upper, lower, left, and right positions of the user's view (or eyes) with respect to an image output device, and information on the viewing angle and direction with respect to the image output device. The viewing position information 410 may include information about a distance between the image output device and the viewing position. For example, the viewing position information 410 may include a distance of the user's view (or eyes) from the image output device. For example, the image output device may include a display and a lens (or a curved mirror) and the viewing position information 410 may mean, but is not limited to, a distance of the user's view from a lens (or curved mirror) of the image output device.

According to an embodiment, the electronic device may determine the values of one or more scaling parameters to compensate for distortion that occurs as the distance of the user's view from the lens of the image output device increases. For example, the electronic device may determine the values of one or more scaling parameters based on the display resolution (or size) for a reference distance. For example, the electronic device may determine a smaller value for the scaling parameter with respect to a distance greater than the reference distance to compensate for the phenomenon in which a partial area of the image is cropped and not visible to the user. In this case, the electronic device may generate a predistorted image with a smaller size (or lower resolution) by using the determined value of the scaling parameter.

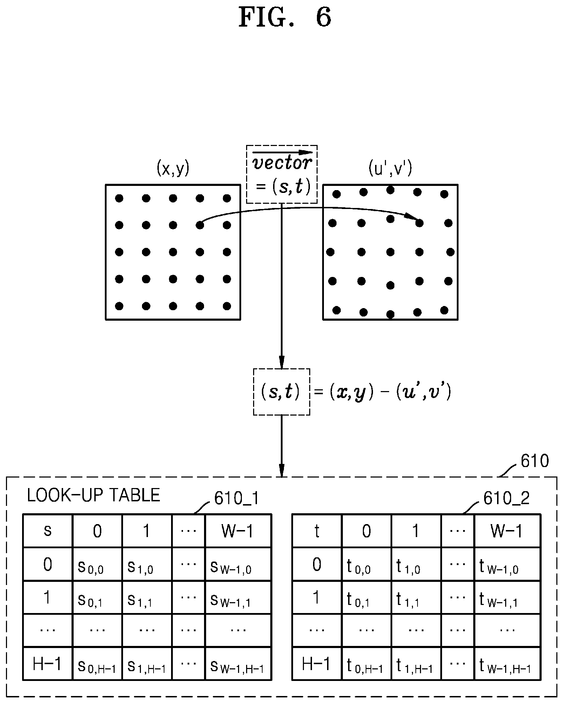

The electronic device may generate a look-up table (LUT) 432 based on at least one of the values of one or more distortion parameters or the values of one or more scaling parameters (430). According to an embodiment, the electronic device may generate the look-up table 432 based on the values of u' and v' calculated based on Expression 2 above. Operation 430 of generating the look-up table 432 by the electronic device of FIG. 4 may be described below with reference to FIG. 6.

The look-up table 432 may be generated to map a plurality of pixels included in a target image 440 to pixels of the predistorted image. According to an embodiment, the look-up table 432 may be associated with the viewing position information 410. For example, the look-up table 432 generated based on the viewing position information 410 may be used when the user is located at the corresponding viewing position.

The resolution (or size) of the look-up table 432 may be determined based on at least one of the resolution (or size) of the image to be distorted or the resolution (or size) of the display. The resolution (or size) of the look-up table 432 may mean the number of pixels to be mapped to the look-up table 432, and for example, in FIG. 4, the width (or column) of the look-up table 432 may include W pixels from 0 to W-1, and the height (or row) of the look-up table 432 may include H pixels from 0 to H-1, and thus the resolution (or size) of the look-up table 432 may be a resolution (or size) of WxH. For example, the horizontal resolution (or size) of the look-up table 432 may be the same as the horizontal resolution (or size) of the image to be distorted, and the vertical resolution (or size) of the look-up table 432 may be the same as the vertical resolution (or size) of the image to be distorted. The value of W of the look-up table 432 of FIG. 4 may be the horizontal resolution (or number of horizontal pixels) (e.g., 3840) of at least one of the image to be distorted or the display, and the value of H may be the vertical resolution (or number of vertical pixels) (e.g., 2160) of at least one of the image to be distorted or the display.

The electronic device may generate a predistorted image 460 by performing a mapping operation 450 on the target image 440 based on the look-up table 432. For example, the target image 440 may be an original image. For example, the target image 440 may be an image in which the original image is converted/scaled to a resolution (or size) of at least one of the look-up table 432 or the display.

The electronic device may generate the predistorted image 460 by mapping a plurality of pixels included in the target image 440 based on vector data included in the look-up table 432 (450). According to an embodiment, the electronic device may identify vector data $(s_{1,1}, t_{1,1})$ corresponding to a pixel (1, 1) in the look-up table, and map the pixel (1,1) of the target image 440 to a pixel $(u'_1, v'_1)$ based on the identified vector data $(s_{1,1}, t_{1,1})$. For example, the electronic device may determine coordinates of the pixel $(u'_1, v'_1)$ based on an operation that subtracts vector data $(s_{1,1}, t_{1,1})$ from coordinates of the pixel (1, 1) of the target image 440. In this case, the electronic device may determine data of the pixel $(u'_1, v'_1)$ of the predistorted image 460 based on data of the pixel (1,1) of the target image 440.

When performing a mapping operation based on the look-up table 432, the electronic device may map two or more pixels of the target image 440 to one pixel. In this case, the electronic device may generate the predistorted image 460 by determining data of one pixel to which the two or more pixels are mapped based on data of two or more pixels of the target image 440. According to an embodiment, the electronic device may apply any operation, algorithm, or rule to data of two or more pixels of the target image 440 to calculate/determine data of one pixel to which the two or more pixels are mapped. For example, the electronic device may determine an average value of data of two or more pixels of the target image 440 as data of one pixel to which two or more pixels are mapped. For example, the electronic device may determine data of a pixel selected based on any rule from among two or more pixels of the target image 440 as data of one pixel to which two or more pixels are mapped.

The look-up table 432 generated according to an embodiment of the present disclosure may be generated based on the values of one or more scaling parameters, and thus the predistorted image 460 generated using the look-up table 432 may be output on the display without additional scaling processing. Therefore, unlike in FIG. 2, the electronic device may not need to perform additional interpolation processing after generating the predistorted image 460.

FIG. 4 illustrates the look-up table 432 including vector data (s, t) for each pixel, but the structure, configuration, form, data type, and the like of the look-up table are not limited thereto.

In the description of FIG. 4 described above, the operations illustrated in FIG. 4 are described as being performed by one electronic device, but are not limited thereto. According to an embodiment, the operations illustrated in FIG. 4 may be performed by a plurality of electronic devices. For example, a first electronic device may generate a look-up table and the generated look-up table may be provided to one or more second electronic devices. One or more second electronic devices may generate a predistorted image from the target image by using the provided look-up table.

FIG. 4 illustrates, but is not limited to, an electronic device identifying values of one or more parameters based on the display resolution 400 and the viewing position information 410. For example, the electronic device may identify one or more parameter values based on only one of the display resolution 400 and the viewing position information 410.

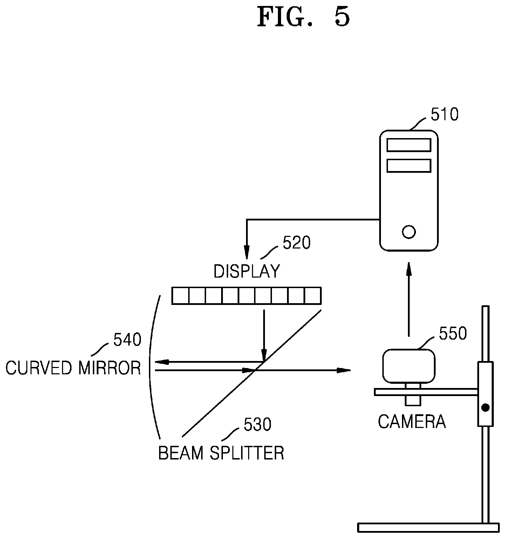

FIG. 5 is a diagram illustrating an example of determining values of one or more parameters according to an embodiment of the present disclosure.

The electronic device may determine a value of at least one of one or more distortion parameters or one or more scaling parameters to apply predistortion to the image. According to an embodiment, the value of at least one of a radial distortion parameter, a tangential distortion parameter, or a scaling parameter may be determined based on a difference between a reference image and an image input to a camera positioned at a target viewing position with respect to an image output device. According to an embodiment, the value of at least one of the radial distortion parameter, the tangential distortion parameter, or the scaling parameter may be determined based on the structure of the image output device, such as the size and position of a display 520, the size and position of a curved mirror 540, and an angular difference between the lens (or curved mirror 540) and the display 520. According to an embodiment, the value of at least one of the radial distortion parameter, the tangential distortion parameter, or the scaling parameter used to generate a look-up table with respect to a target viewing position may be determined based on a target viewing position for the image output device.

Referring to FIG. 5, the image output device may include the display 520 (e.g., an image forming module), a beam splitter 530, and the curved mirror 540 (e.g., a concave mirror). The output image is output on the display 520, reflected by the beam splitter 530, reaches the curved mirror 540, is focused by the curved mirror 540, and passes through the beam splitter 530 to reach the user's view. The image output device may be an output device included as a component in an electronic device 510, or a device connected to or communicable with the electronic device 510.

To determine the values of one or more parameters used to generate a look-up table for a target viewing position, a camera 550, which is an image input device, may be positioned at the target viewing position with respect to the image output device. The value of the scaling parameter may be associated with a distance between the curved mirror 540 of the image output device and the target viewing position. The camera 550 may be an input device included as a component in an electronic device 510, or a device connected to or communicable with the electronic device 510.

According to an embodiment, the electronic device 510 may output the reference image through the image output device. For example, the electronic device 510 may generate an output image by performing predistortion processing on the reference image and output the generated output image on the display 520. According to an embodiment, the electronic device 510 may obtain an image input to the camera 550. The output image on the display 520 may be distorted while passing through the beam splitter 530 and the curved mirror 540 and input to the camera 550, and the electronic device may obtain the distorted image.

According to an embodiment, the values of one or more parameters may be determined based on a difference between an original reference image and the image input to the camera 550. According to an embodiment, based on Expression 3 below, optimal values of parameters that minimize a difference between the image input to the camera and the original reference image may be determined, estimated, and inferred.

## Expression 3

$$\min_{k_1, k_2, k_3, p_1, p_2, m, n} org\_img(x, y) - cam\_img(org\_img(x, y), k_1, k_2, k_3, p_1, p_2, m, n)$$

In Expression 3 above, $k_1$, $k_2$, and $k_3$ may represent radial distortion parameters, $p_1$ and $p_2$ may represent tangential distortion parameters, and m and n may represent scaling parameters. $org\_img(x, y)$ may represent an original reference image, and $cam\_img(org\_img(x, y), k_1, k_2, k_3, p_1, p_2, m, n)$ may represent an image input to a camera when a predistorted reference image is output to an image processing device by using the value of the parameter $k_1$, $k_2$, $k_3$, $p_1$, $p_2$, m, n. Based on Expression 3 above, the value of the parameter $k_1$, $k_2$, $k_3$, $p_1$, $p_2$, m, n may be determined simultaneously, but is not limited thereto. For example, the values of at least some of the parameters $k_1$, $k_2$, $k_3$, $p_1$, $p_2$, m, n may be determined by other factors or methods, and the values of the remaining parameters may be determined based on Expression 3 above.

According to an embodiment, the values of one or more parameters may be determined experimentally/empirically. According to an embodiment, the electronic device may determine values of one or more parameters for reducing a difference between the original reference image and the image input to the camera by using any model, method, algorithm, or the like. According to an embodiment, the values of one or more parameters calculated/determined by the electronic device based on any factor or method may be experimentally fine-tuned.

One or more of the embodiments described above with reference to FIG. 5 may be performed in the operation of identifying the value of the distortion parameter of FIG. 2 (i.e., 220 of FIG. 2), the operation of identifying the value of the distortion parameter and the value of the scaling parameter of FIG. 4 (i.e., 420 of FIG. 4), but are not limited thereto.

FIG. 6 is a diagram illustrating an example of generating a look-up table according to an embodiment of the present disclosure.

The electronic device may generate a look-up table 610 based on values of one or more parameters. According to an embodiment, the electronic device may determine coordinates of a second pixel corresponding to coordinates of a first pixel based on the values of one or more parameters. The coordinates of the second pixel corresponding to the coordinates of the first pixel may be coordinates of the pixel to which the first pixel of the target image is mapped when the target image is predistorted. For example, the electronic device may determine the coordinates of pixels (u', v') corresponding to the coordinates of pixels (x, y) of the target image based on Expression 2 above. For example, pixels (x, y) may represent positions in the target image, and pixels (u', v') may represent positions in the display (or locations in the predistorted output image).

The electronic device may calculate a vector corresponding to the first pixel to be included in the look-up table 610 based on the coordinates of the first pixel and the coordinates of the second pixel. The electronic device may generate the look-up table 610 including a vector (e.g., a mapping vector) corresponding to the calculated first pixel. The vector corresponding to the first pixel may be included in the look-up table 610 for the first pixel, i.e., in a cell corresponding to the first pixel in the look-up table 610.

According to an embodiment, the electronic device may calculate the vector corresponding to the first pixel based on an operation that subtracts the coordinates of the second pixel from the coordinates of the first pixel. For example, the electronic device may calculate vectors included in the look-up table 610 based on Expression 4 below.

Expression 4

$$(s, t) = (x, y) - (u', v')$$

In Expression 4 above, (x, y) may represent coordinates of a target pixel to be mapped, (u', v') may represent coordinates of a pixel corresponding to the pixel (x, y), which are calculated based on the values of one or more parameters, (s, t) may represent a vector corresponding to the coordinates of the pixel (x, y), and (s, t) may be data for the pixel (x, y), which are included in the look-up table 610.

FIG. 6 illustrates the look-up table 610 including a table 610_1 for a first component (s) of a vector (s, t) and a table 610_2 for a second component (t), but the structure, configuration, form, data type, and the like of the look-up table are not limited thereto.

One or more of the embodiments described above with reference to FIG. 6 may be performed in the operation of generating the look-up table of FIG. 4 (i.e., 430 of FIG. 4), but are not limited thereto.

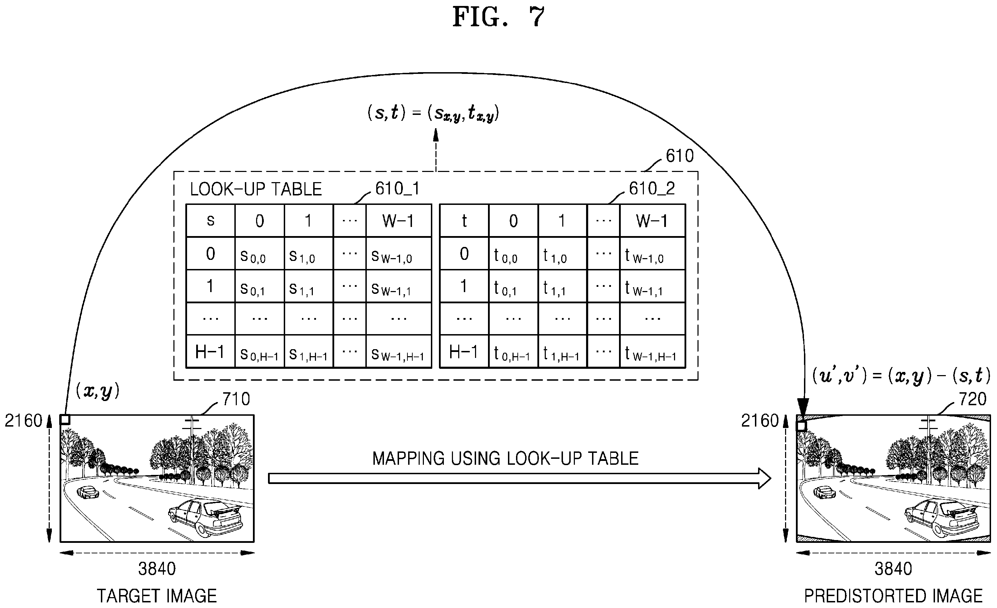

FIG. 7 is a diagram showing an example of generating a predistorted image by using a look-up table according to an embodiment of the present disclosure.

FIG. 7 shows an example of the mapping operation described above with reference to FIG. 4 (i.e., 450 in FIG. 4). Referring to FIG. 7, the electronic device may identify a target image 710 having a resolution (or size) of 3840x2160 (i.e., 4 k). The electronic device may identify the target look-up table 610 to be used to generate a predistorted image. According to an embodiment, the electronic device may obtain the target look-up table 610 generated by another electronic device. According to an embodiment, the electronic device may identify a user viewing position and identify the target look-up table 610 for the identified viewing position.

The electronic device may perform a mapping operation on the target image 710 by using the look-up table 610. According to an embodiment, the electronic device may identify a vector (s, t) corresponding to the coordinates (x, y) of the first pixel of the target image 710 in the look-up table 610. The electronic device may obtain a values $s_{x,y}$ corresponding to the coordinates (x, y) of the first pixel from the table 610_1 for a first element of the look-up table 610 and may obtain a value $t_{x,y}$ corresponding to the coordinates (x, y) of the first pixel from the table 610_2 for a second element. Accordingly, the electronic device may identify the vector $(s_{x,y}, t_{x,y})$ including values obtained from the look-up table 610 as the vector (s, t) corresponding to the coordinates (x, y) of the first pixel.

The electronic device may determine the coordinates (u', v') of the second pixel based on an operation of subtracting a vector $(s_{x,y}, t_{x,y})$ identified as a vector (s, t) corresponding to the coordinates (x, y) of the first pixel from the coordinates (x, y) of the first pixel. Referring to FIG. 7, the electronic device may determine coordinates of the second pixel corresponding to coordinates of the first pixel based on Expression 5 below.

Expression 5

$$(u', v') = (x, y) - (s, t)$$

In Expression 5 above, (x, y) represents the coordinates of a target pixel to be mapped in a target image, (u', v') represents the coordinates of a pixel corresponding to the coordinates of the pixel (x, y), and (s, t) may represent a vector corresponding to the coordinates of the pixel (x, y) included in the look-up table 610. For example, (u', v') may represent the coordinates of a pixel in the predistorted image to be generated.

The electronic device may generate a predistorted image 720 of 3840x2160 based on data (e.g., image data) of the first pixel (x, y) of the target image 710 and coordinates (u', v') of the second pixel. According to an embodiment, data of the second pixel (u', v') in the predistorted image 720 may be determined based on data of the first pixel (x, y) in the target image. For example, the electronic device may determine data of the first pixel (x, y) in the target image as data of the second pixel (u', v') in the predistorted image 720. The electronic device may generate the predistorted image 720 by performing the operations described above on a plurality of pixels included in the target image 710.

The predistorted image 720 of 3840x2160 generated in FIG. 7 may be directly output on a display with a resolution (or size) of 3840x2160, and may be output as a complete image without any cropping. As described above with reference to FIG. 7, when the predistorted image 720 is generated using the look-up table 610 generated based on the scaling parameter, the electronic device may output the predistorted image 720 on the display without additional scaling processing. Therefore, the electronic device may not need to perform interpolation processing on the predistorted image 720.

No interpolation processing is performed, and thus it may take the electronic device about 0.1 seconds to process a single image with a resolution of 3840x2160, or about 1.29 seconds to process a video including 50 image frames. Compared to performing scaling after generating the predistorted image without loss of image quality by applying the predistortion coordinates, it may reduce a time for processing a single image with a resolution of 3840x2160 by about 2.07 seconds, and it may reduce a time for processing a video including 50 image frames by 158.58 seconds. Therefore, according to an embodiment of the present disclosure, when the predistorted image 720 is generated using the look-up table 610 generated based on the scaling parameter, the image processing time may be reduced, and even more time may be reduced when processing a video including a large number of image frames.

Although FIG. 3 illustrates the target image 710 having a resolution (or size) of 3840x2160, the resolution (or size) of the target image is not limited to 3840x2160, and the target image may have a higher resolution (or larger size) or, conversely, a lower resolution (or smaller size).

FIG. 3 illustrates an example in which an electronic device generates the predistorted image 720 of the same resolution (or size) for the target image 710 of resolution of 3840x2160 (or size), but is not limited thereto. According to an embodiment, the resolution of the target image 710 and the resolution of the predistorted image 720 may be different from each other. For example, the electronic device may generate the predistorted image 720 having a lower resolution (or smaller size) than the resolution (or size) of the target image 710. According to an embodiment, the electronic device may generate the predistorted image 720 having a lower resolution (or smaller size) than the display resolution (or size) by using a look-up table for a viewing position further from the reference position from the image output device. The electronic device may output the predistorted image 720 having a lower resolution (or smaller size) than the display resolution (or size) to a partial area of the display (e.g., a middle area).

FIG. 7 illustrates the look-up table 610 including the table 610_1 for a first component (s) of a vector (s, t) for each pixel and the table 610_2 for a second component (t), but the structure, configuration, form, data type, and the like of a look-up table used by an electronic device to generate a predistorted image are not limited thereto.

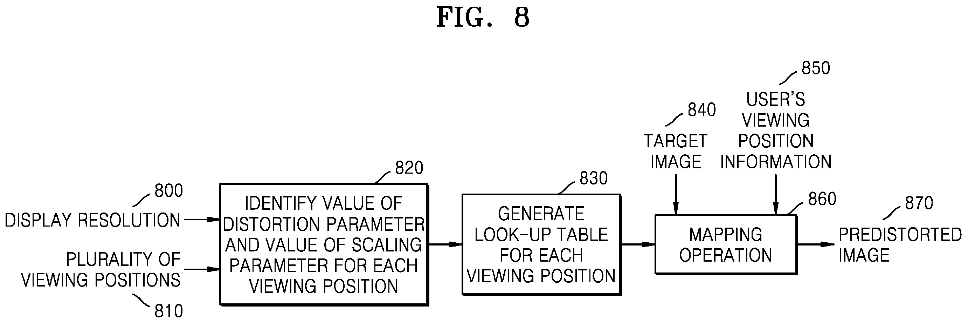

FIG. 8 is a diagram showing an example of generating a predistorted image by using a user's viewing position according to an embodiment of the present disclosure.

In the detailed description of FIG. 8, a repeated description of FIGS. 4 to 7 may be omitted. According to an embodiment, the electronic device may identify information about a plurality of viewing positions 810. Information about each viewing position is position information of 6-degree of freedom (6-DOF) and may include vector data (c1, c2, c3, c4, c5, c6). The position information of 6-DOF may represent information about the user's head direction, pose, gaze direction, location, and the like.

The electronic device may identify the values of one or more parameters for each viewing position. According to an embodiment, the electronic device may identify a value of a distortion parameter (e.g., a radial distortion parameter and a tangential distortion parameter) and a value of a scaling parameter for each viewing position (820). For example, the electronic device may determine a value of at least one of the radial distortion parameter, the tangential distortion parameter, or the scaling parameter for each viewing position based on information about the plurality of viewing positions 810 and/or a display resolution 800 (or size). For example, the electronic device may determine the value of at least one of the radial distortion parameter, the tangential distortion parameter, or the scaling parameter for each viewing position by performing one or more of the embodiments described above with reference to FIGS. 4 and/or 5.

The value of at least one of the radial distortion parameter, the tangential distortion parameter, or the scaling parameter for the viewing position (c1, c2, c3, c4, c5, c6) may be determined, estimated, or inferred based on Expression 6 below.

## Expression 6

$$\min_{k_1, k_2, k_3, p_1, p_2, m, n} org\_img(x, y) - cam\_img_{c1, c2, c3, c4, c5, c6}(org\_img(x, y), k_1, k_2, k_3, p_1, p_2, m, n)$$

In Expression 6 above, $k_1$, $k_2$, and $k_3$ may represent radial distortion parameters, $p_1$ and $p_2$ may represent tangential distortion parameters, and m and n may represent scaling parameters. *org_img*(x, y) may represent an original reference image, and $cam\_img_{c1,c2,c3,c4,c5,c6}(org\_img(x, y), k_1, k_2, k_3, p_1, p_2, m, n)$ may represent an image input to a camera positioned at position (c1, c2, c3, c4, c5, c6) when a predistorted reference image is output to an image processing device by using the value of the parameter $k_1, k_2, k_3, p_1, p_2, m, n$. Based on Expression 6 above, the value of the parameter $k_1, k_2, k_3, p_1, p_2, m, n$ may be determined simultaneously, but is not limited thereto. For example, the values of at least some of the parameters $k_1, k_2, k_3, p_1, p_2, m, n$ may be determined by other factors or methods, and the values of the remaining parameters may be determined based on Expression 6 above.

The electronic device may generate a look-up table for each viewing position based on the values of parameters for each viewing position (830). According to an embodiment, the electronic device may generate a plurality of look-up tables for the plurality of viewing positions 810. For example, the electronic device may generate a look-up table for a first viewing position based on values of parameters determined based on the first viewing position, and may generate a look-up table for a second viewing position based on values of parameters determined based on the second viewing position.

The electronic device may identify a target image 840 and user's viewing position information 850. According to an embodiment, the electronic device may identify the user's viewing position with respect to the image output device by tracking the user's viewing position. The electronic device may determine, among a plurality of look-up tables, a target look-up table to be used as a look-up table for the identified user's viewing position. The look-up table for the user's viewing position may be a look-up table generated based on the values of one or more parameters determined based on information about the corresponding viewing position. The electronic device may generate a predistorted image 870 by performing a mapping operation 860 on the target image 840 based on the look-up table for the user's viewing position.

The electronic device may periodically or aperiodically identify the user's viewing position information 850. As the user's viewing position information 850 changes, the electronic device may determine a look-up table to be used in the mapping operation 860. For example, when first viewing position information is identified at a first time point, the electronic device may generate a predistorted image by performing the mapping operation 860 by using a look-up table for a first viewing position, and then, when second viewing position information is identified at a second time point, the electronic device may generate a predistorted image 870 by performing the mapping operation 860 by using a look-up table for a second viewing position.

To reduce computer memory usage and complexity, the electronic device may generate or store a look-up table for only some viewing positions. According to an embodiment, when the electronic device identifies the first viewing position as a user viewing position but a look-up table for the first viewing position is not stored, the electronic device may use a look-up table for another viewing position that is close to the first viewing position, or may derive and use a look-up table for the first viewing position based on a look-up table for one or more other viewing positions. For example, when the first viewing position is identified as the user viewing position but a look-up table for the first viewing position is not stored, the electronic device may perform the mapping operation 860 on the target image 840 by using a look-up table for the second viewing position. For example, when the first viewing position is identified as the user viewing position but a look-up table for the first viewing position is not stored, the electronic device may derive the look-up table for the first viewing position based on the look-up table for the second viewing position and the look-up table for a third viewing position and perform the mapping operation 860 on the target image 840. For example, when the first viewing position is identified as the user viewing position but a look-up table for the first viewing position is not stored, the electronic device may perform the mapping operation 860 on the target image 840 based on data calculated by performing any operation (e.g., average or median) on data included in the look-up table for the second viewing position and/or the look-up table for the third viewing position.

In FIG. 8, each operation is illustrated as being performed for a plurality of viewing positions, but is not limited thereto. For example, the electronic device may generate the look-up table for the first viewing position and then generate the look-up table for the second viewing position.

In the description of FIG. 8 described above, the operations illustrated in FIG. 8 are described as being performed by one electronic device, but are not limited thereto. According to an embodiment, the operations illustrated in FIG. 8 may be performed by a plurality of electronic devices. For example, one or more first electronic devices may generate a look-up table and the generated look-up table may be provided to one or more second electronic devices. One or more second electronic devices may generate a predistorted image from the target image by using the provided look-up table.

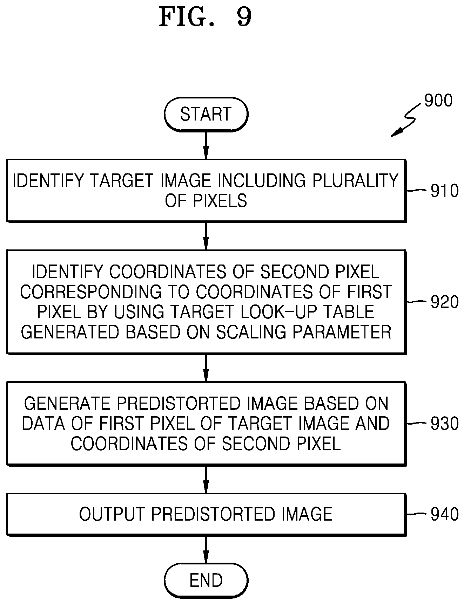

FIG. 9 is a flowchart of a method of generating a predistorted image by using a look-up table by an electronic device according to an embodiment of the present disclosure.

Referring to FIG. 9, a method 900 of generating a pre-distorted image using a look-up table by an electronic device according to an embodiment may include operations 910 to 940. According to an embodiment, operations 910 to 940 may be performed by at least one processor included in the electronic device. According to one or more embodiments, the method 900 of generating a predistorted image by using a look-up table by an electronic device is not limited to that illustrated in FIG. 9, and may further include operations not illustrated in FIG. 9, or some operations may be omitted.

In operation 910, the electronic device may identify a target image including a plurality of pixels. According to an embodiment, the target image may be an original image. According to an embodiment, the target image may be obtained by upscaling/downscaling the original image. For example, based on the resolution of the original image being different from the resolution of the target look-up table, the electronic device may generate a target image having the same resolution as the resolution of the target look-up table from the original image. That is, the electronic device may convert the original image to the resolution (or size) of the target look-up table and then use the target look-up table.

In operation 920, the electronic device may identify the coordinates of the second pixel corresponding to the coordinates of the first pixel by using the target look-up table generated based on a scaling parameter associated with an image output size. According to an embodiment, the target look-up table may be generated based on other parameters such as radial distortion parameters and tangential distortion parameters, and scaling parameters. According to an embodiment, the target look-up table may be a look-up table selected by the electronic device from among a plurality of look-up tables based on user's viewing position information. That is, the electronic device may identify the user's viewing position information and determine, select, and identify a look-up table for the user's viewing position as a target look-up table among a plurality of look-up tables.

In operation 930, the electronic device may generate a predistorted image based on data of the first pixel of the target image and coordinates of the second pixel. According to an embodiment, data of the second pixel in the predistorted image may be determined based on data of the first pixel in the target image. According to an embodiment, when the coordinates of the first pixel and the coordinates of the third pixel both correspond to the coordinates of the second pixel in the target look-up table, the electronic device may determine the data of the second pixel in the predistorted image based on the data of the first pixel and the data of the third pixel in the target image. For example, the electronic device may determine the data of the second pixel in the predistorted image based on the data of the first pixel and the data of the third pixel in the target image by using any rule, algorithm, operation, or model.

In operation 940, the electronic device may output the generated predistorted image. According to an embodiment, the electronic device may output a predistorted image without performing additional interpolation processing for scaling on the predistorted image generated using the look-up table, but the embodiment is not limited thereto.

According to an embodiment, the electronic device may perform operations 910 to 940 by using each image frame as a target image (or original image) to process a video including a plurality of image frames. According to an embodiment, the electronic device may identify the user's viewing position information periodically or aperiodically and determine a target look-up table from among a plurality of look-up tables based on the user's viewing position information. In this case, as the user's viewing position information changes, the target look-up table may also change, and different predistorted images may be generated and output for the same target image. For example, as the user's viewing position information changes, a first look-up table may be used to process a first image frame of a video, and a second look-up table may be used to process a second image frame.

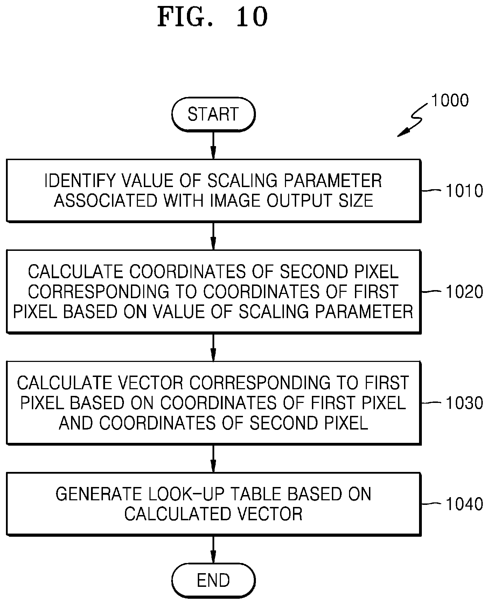

FIG. 10 is a flowchart of a method of generating a look-up table by an electronic device according to an embodiment of the present disclosure.

Referring to FIG. 10, a method 1000 of generating a look-up table by an electronic device according to an embodiment may include operations 1010 to 1040. According to an embodiment, operations 1010 to 1040 may be performed by at least one processor included in the electronic device. According to one or more embodiments, the method 1000 of generating a look-up table by an electronic device is not limited to that illustrated in FIG. 10, and may further include operations not illustrated in FIG. 10, or some operations may be omitted.

In operation 1010, the electronic device may identify a value of a scaling parameter associated with an image output size. According to an embodiment, the value of the scaling parameter may be determined based on at least one of a distance between the image output device and the viewing position or a display resolution.

In operation 1020, the electronic device may calculate coordinates of a second pixel corresponding to coordinates of a first pixel based on the value of the scaling parameter. According to an embodiment, the electronic device may identify values of other parameters, such as a radial distortion parameter and a tangential distortion parameter, and calculate the coordinates of the second pixel corresponding to the coordinates of the first pixel based on the values of the identified other parameters and the value of the scaling parameter.

In operation 1030, the electronic device may calculate a vector corresponding to the first pixel based on the coordinates of the first pixel and the coordinates of the second pixel. According to an embodiment, the electronic device may calculate the vector corresponding to the first pixel based on an operation that subtracts the coordinates of the second pixel from the coordinates of the first pixel.

In operation 1040, the electronic device may generate a look-up table based on the calculated vector. According to an embodiment, the generated look-up table may be used to generate a predistorted image for a target image. According to an embodiment, the electronic device may provide the generated look-up table to another electronic device.

The electronic device may generate a plurality of look-up tables for a plurality of viewing positions by performing operations 1010 to 1040 for each of the plurality of viewing positions. According to an embodiment, the electronic device may generate the plurality of look-up tables by performing the method 1000 sequentially or in parallel for each of the plurality of viewing positions.

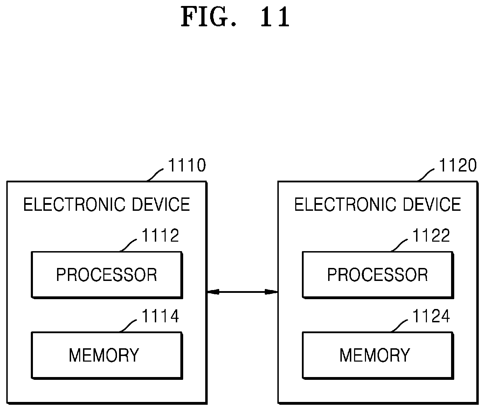

FIG. 11 is a block diagram illustrating an example of an electronic device for generating a look-up table and an electronic device for generating a predistorted image according to an embodiment of the present disclosure.

An electronic device 1110 illustrated in FIG. 11 is a device that generates a look-up table and may be a user terminal or a server device. An electronic device 1120 illustrated in FIG. 11 is a device that generates a predistorted image by using a look-up table and may be a user terminal or a server device. For example, the electronic devices 1110 and 1120 may each be a user terminal such as a desktop computer, a laptop computer, a notebook, a smart phone, a tablet PC, a mobile phone, a smart watch, a wearable device, an augmented reality (AR) device, or a virtual reality (VR) device.

In FIG. 11, the electronic device 1110 that generates a look-up table and the electronic device 1120 that generates a predistorted image by using a look-up table are illustrated as different devices, but the present disclosure is not limited thereto. According to an embodiment of the present disclosure, the electronic device 1110 that generates a look-up table and the electronic device 1120 that generates a predistorted image by using a look-up table may be the same user terminal or server device. For example, one electronic device may generate a look-up table and use the generated look-up table to generate a predistorted image.

According to an embodiment of the present disclosure, the electronic device 1110 may provide one or more generated look-up tables to the electronic device 1120. The electronic device 1120 may generate the predistorted image by using one or more provided look-up tables. For example, the electronic device 1110 may update a look-up table included in the electronic device 1120. According to an embodiment of the present disclosure, the electronic device 1110 may provide one or more generated look-up tables to the plurality of electronic devices 1120. According to an embodiment of the present disclosure, the electronic device 1120 may receive one or more look-up tables from the plurality of electronic devices 1110.

According to an embodiment of the present disclosure, the electronic device 1110, 1120 may include at least one processor 1112, 1122 and memory 1114, 1124, but the present disclosure is not limited thereto.

The processor 1112, 1122 may be electrically connected to components included in the electronic device 1110, 1120 and may perform operations or data processing related to control and/or communication of the components included in the electronic device 1110, 1120. According to an embodiment, the processor 1112, 1122 may load a request, command, or data received from at least one of the other components into memory, process the same, and store the processing result data in the memory. The processor 1112, 1122 may be components that control a series of processes to operate the electronic device 1110, 1120 according to the embodiments described above and may include one or more processors.

One or more processors included in the processor 1112, 1122 may be a circuitry such as a System on Chip (SoC) or an integrated circuit (IC). One or more processors included in the processor 1112, 1122 may include at least one of a general-purpose processor such as a central processing unit (CPU), a microprocessor unit (MPU), an application processor (AP), and a digital signal processor (DSP), a graphics-dedicated processor such as a graphics processing unit (GPU) and a vision processing unit (VPU), an artificial intelligence-dedicated processor such as a neural processing unit (NPU), or a communication-dedicated processor such as a communication processor (CP). When one or more processors included in the processor 1112, 1122 are artificial intelligence-dedicated processors, the corresponding artificial intelligence-dedicated processor may be designed with a hardware structure specialized for processing a certain artificial intelligence model.

The processor 1112, 1122 may include various processing circuits and/or a plurality of processors. For example, the term 'processor' as used in the present disclosure, including the claims, may include various processing circuits that include at least one processor. One or more of the processors may be configured to perform one or more functions individually and/or collectively in a distributed manner, in the present disclosure. In the present disclosure, when a 'processor', 'at least one processor', or 'one or more processors' is described as being configured to perform a plurality of functions, this may include a situation in which one processor performs some of the functions and other processor(s) perform other some of the functions and a situation in which a single processor performs all of the functions. At least one processor may include a combination of processors that perform various functions in a distributed manner. At least one processor may execute program instructions to obtain or perform various functions.

The processor 1112, 1122 may write data to the memory 1114, 1124 or read data stored in the memory 1114, 1124, and in particular, may execute a program or at least one instruction stored in the memory 1114, 1124 to process data according to a predefined operation rule or artificial intelligence model. The processor 1112, 1122 may be controlled to process input data according to the predefined operating rule, algorithm, method or model stored in the memory 1114, 1124. The processor 1112 1122 may be controlled to process input data (e.g., a target image) based on data (e.g., a look-up table) stored in the memory 1114, 1124.

The memory 1114, 1124 may be electrically connected to the processor 1112, 1122 and may store one or more modules, algorithms, operating rules, models, programs, instructions or data related to the operation of the components included in the electronic device 1110, 1120. For example, the memory 1114, 1124 may store one or more modules, algorithms, operating rules, models, programs, instructions, or data for processing and controlling of the processor 1112, 1122.

The memory 1114, 1124 may be configured as a storage medium or a combination of storage media such as, but are not limited to, a flash memory type, a hard disk type, a multimedia card micro type, card type memory (e.g., SD or XD memory), random access memory (RAM), static random access memory (SRAM), read-only memory (ROM), electrically erasable programmable read-only memory (EEPROM), programmable read-only memory (PROM), magnetic memory, magnetic disk, and an optical disk. The memory 1114, 1124 may not exist separately and may be configured to be included in the processor 1112, 1122. The memory 1114, 1124 may include volatile memory, non-volatile memory, or a combination of volatile memory and non-volatile memory. A program or at least one instruction for performing operations according to the embodiments described above may be stored in the memory 1114, 1124. The memory 1114, 1124 may also provide stored data to the processor 1112, 1122 upon request of the processor 1112, 1122.

According to an embodiment of the present disclosure, the memory 1114, 1124 may store data and information identified, obtained, or generated by the electronic device 1110, 1120. For example, the memory 1114, 1124 may store one or more look-up tables and the like. For example, the memory 1114, 1124 may store one or more look-up tables in relation to viewing position information. For example, the memory 1114, 1124 may store a reference image, an original image, a target image, a predistorted image, and the like. For example, the memory 1114, 1124 may store values of one or more parameters. For example, the memory 1114, 1124 may store information about an image output device (e.g., specifications). The memory 1114, 1124 may store data and information identified, obtained, or generated by the electronic device 1110, 1120 in a compressed form.

Some modules that perform at least one operation of the electronic device 1110, 1120 may be implemented as a hardware module, a software module, and/or a combination thereof. The memory 1114, 1124 may include software modules that perform at least some of the operations of the electronic device 1110, 1120 described above. According to an embodiment, the module included in the memory 1114, 1124 may be executed by the processor 1112, 1122 to perform operations. For example, the module (i.e., software module) included in the memory 1114, 1124 may be executed according to control or command of the processor 1112, 1122 and may include a program, model, or algorithm that is configured to perform operations of deriving output data for input data. Some modules that perform at least one operation of the electronic device 1110, 1120 may include a plurality of sub-modules or may include one module.

The electronic device 1110, 1120 may include more components than those illustrated in FIG. 11. According to an embodiment, the electronic device 1110, 1120 may further include a communication interface (or communication module) for communicating with an external device. According to an embodiment, the electronic device 1110, 1120 may further include an input/output device and/or an input/output interface. For example, the electronic device 1120 may further include a camera sensor for obtaining a target image (or original image). For example, the electronic device 1120 may further include an image output device (e.g., a display or a virtual screen) that outputs a predistorted image.

In the present disclosure, a repeated description in FIGS. 1A to 11 may be omitted, and one or more of the embodiments described above may be applied/implemented in combination with each other. In the present disclosure, one or more embodiments described with respect to an image may also be applied to a video, and one or more embodiments described with respect to a video may also be applied to an image.

According to an embodiment of the present disclosure, a method performed by an electronic device may include identifying a target image including a plurality of pixels. According to an embodiment of the present disclosure, the method may include identifying coordinates of a second pixel corresponding to coordinates of a first pixel by using a target look-up table generated based on a scaling parameter associated with an image output size. According to an embodiment of the present disclosure, the method may include generating a predistorted image based on data of the first pixel of the target image and coordinates of the second pixel. According to an embodiment of the present disclosure, the method may include outputting the predistorted image. According to an embodiment of the present disclosure, data of the second pixel in the predistorted image may be determined based on the data of the first pixel in the target image. According to an embodiment of the present disclosure, a scaling operation (e.g., interpolation operation) for a predistorted image may be omitted, thereby reducing an image/video processing time.

According to an embodiment of the present disclosure, the value of the scaling parameter may be determined based on at least one of a distance between the image output device and the viewing position or a display resolution. According to an embodiment of the present disclosure, a predistorted image suitable for a display resolution (or size) may be generated. According to an embodiment of the present disclosure, by applying predistortion suitable for a viewing position to a target image, a user located at the corresponding viewing position may view an image without distortion or with less distortion.

According to an embodiment of the present disclosure, the target look-up table may be generated based on a radial distortion parameter and a tangential distortion parameter. According to an embodiment of the present disclosure, predistortion that compensates for distortion due to a curvature difference between a display and a lens and distortion due to an inclination difference between the display and the lens may be applied to the target image.

According to an embodiment of the present disclosure, at least one of the value of the scaling parameter, the value of the radial distortion parameter, or the value of the tangential distortion parameter for the target look-up table may be determined based on a difference between an original reference image and an image input to a camera positioned at a target position with respect to an image output device. According to an embodiment of the present disclosure, the target look-up table may be associated with the target position. According to an embodiment of the present disclosure, a predistorted image may be generated and output based on optimal values of parameters, and a user may be provided with an original image without distortion.

According to an embodiment of the present disclosure, the identifying of the coordinates of the second pixel corresponding to the coordinates of the first pixel may include identifying a vector corresponding to the coordinates of the first pixel by using the target look-up table. According to an embodiment of the present disclosure, the identifying of the coordinates of the second pixel corresponding to the coordinates of the first pixel may include determining the coordinates of the second pixel based on an operation of subtracting the identified vector from the coordinates of the first pixel. According to an embodiment of the present disclosure, a predistorted image may be generated by a subtraction operation without complex operations, thereby enabling fast image processing.

According to an embodiment of the present disclosure, the method may include identifying the coordinates of the second pixel corresponding to the coordinates of the third pixel based on the target look-up table. According to an embodiment of the present disclosure, the data of the second pixel in the predistorted image may be determined based on the data of the first pixel and data of the third pixel in the target image. According to an embodiment of the present disclosure, the predistorted image having a lower resolution (or smaller size) than the target image may be generated.

According to an embodiment of the present disclosure, the method may include identifying the user's viewing position information. According to an embodiment of the present disclosure, the method may include identifying the target look-up table among a plurality of look-up tables based on the user's viewing position information. According to an embodiment of the present disclosure, the electronic device may generate and output a predistorted image by using a look-up table most suitable for the user's viewing position among a plurality of look-up tables, and thus the user may view an image with little or no distortion at any position.

According to an embodiment of the present disclosure, the user's viewing position information may be position information of 6-degree of freedom (6-DOF). According to an embodiment of the present disclosure, the electronic device may generate and output a predistorted image in consideration of more detailed viewing position information, and the user may be provided with an image without distortion (or with less distortion) even when the viewing position including the gaze direction changes.

According to an embodiment of the present disclosure, the method may include identifying a resolution of an original image. According to an embodiment of the present disclosure, the method may include generating the target image having the same resolution as the resolution of the target look-up table from the original image, based on a resolution of the original image being different from the resolution of the target look-up table. According to an embodiment of the present disclosure, even when the resolution of the original image is different from the resolution of the previously stored look-up table, the electronic device may generate and output a predistorted image by using the previously stored look-up table.

According to an embodiment of the present disclosure, a method performed by the electronic device may include identifying a value of a scaling parameter associated with an image output size. According to an embodiment of the present disclosure, the method may include calculating the coordinates of the second pixel corresponding to the coordinates of the first pixel based on the value of the scaling parameter. According to an embodiment of the present disclosure, the method may include calculating a vector corresponding to the first pixel based on the coordinates of the first pixel and the coordinates of the second pixel. According to an embodiment of the present disclosure, the method may include generating a look-up table for generating a predistorted image for a target image based on the calculated vector. According to an embodiment of the present disclosure, the electronic device may generate and provide a look-up table by which a scaling operation for a predistorted image is to be omitted. That is, the look-up table for reducing an image/video processing time based on a scaling parameter may be generated.

According to an embodiment of the present disclosure, the calculating of the vector corresponding to the first pixel may include calculating a vector corresponding to the first pixel based on an operation of subtracting the coordinates of the second pixel from the coordinates of the first pixel. According to an embodiment of the present disclosure, the electronic device may generate a look-up table for pixel mapping by using a subtraction operation. The electronic device that performs image/video processing by using a look-up table generated by a subtraction operation may generate a predistorted image by a subtraction operation without complex operations, and thus the image/video processing speed may be improved.

According to an embodiment of the present disclosure, the value of the scaling parameter may be determined based on at least one of a distance between the image output device and the viewing position or a display resolution. According to an embodiment of the present disclosure, a look-up table for generating a predistorted image suitable for a display resolution (or size) may be generated. According to an embodiment of the present disclosure, when a predistorted image is generated and output using a look-up table generated based on the value of a scaling parameter according to a distance between an image output device and a viewing position, a user located at the viewing position may view an image without distortion or with less distortion.

According to an embodiment of the present disclosure, the method may include identifying a value of a radial distortion parameter and a value of a tangential distortion parameter. According to an embodiment of the present disclosure, the calculating of the coordinates of the second pixel may include calculating the coordinates of the second pixel based on a value of the scaling parameter, a value of the radial distortion parameter, and a value of the tangential distortion parameter. According to an embodiment of the present disclosure, a look-up table with which predistortion is integrated to compensate for distortion due to a curvature difference between a display and a lens and distortion due to an inclination difference between the display and the lens may be provided.

According to an embodiment of the present disclosure, at least one of the value of the scaling parameter, the value of the radial distortion parameter, or the value of the tangential distortion parameter may be determined based on a difference between an original reference image and an image input to a camera positioned at a target viewing position with respect to an image output device. According to an embodiment of the present disclosure, the look-up table may be associated with the target viewing position. According to an embodiment of the present disclosure, a look-up table may be generated based on optimal values of parameters to provide an image with minimized distortion to a viewer.

According to an embodiment of the present disclosure, the method may include generating a plurality of look-up tables for a plurality of viewing positions. According to an embodiment of the present disclosure, a user may view an image with no or little distortion at any of a plurality of viewing positions.

According to an embodiment of the present disclosure, the electronic device may include memory storing one or more instructions and at least one processor configured to execute the one or more instructions stored in the memory. According to an embodiment of the present disclosure, the at least one processor may be configured to execute the one or more instructions to cause the electronic device to identify a target image including a plurality of pixels. According to an embodiment of the present disclosure, the at least one processor may be configured to execute the one or more instructions to cause the electronic device to identify coordinates of a second pixel corresponding to coordinates of a first pixel by using a target look-up table generated based on a scaling parameter associated with an image output size. According to an embodiment of the present disclosure, the at least one processor may be configured to execute the one or more instructions to cause the electronic device to generate a predistorted image based on data of the first pixel of the target image and the coordinates of the second pixel. According to an embodiment of the present disclosure, the at least one processor may be configured to execute the one or more instructions to cause the electronic device to output the predistorted image. According to an embodiment of the present disclosure, data of the second pixel in the predistorted image may be determined based on data of the first pixel in the target image.

According to an embodiment of the present disclosure, the value of the scaling parameter may be determined based on at least one of a distance between the image output device and the viewing position or a display resolution.

According to an embodiment of the present disclosure, the target look-up table may be generated based on a radial distortion parameter and a tangential distortion parameter.

According to an embodiment of the present disclosure, at least one of the value of the scaling parameter, the value of the radial distortion parameter, or the value of the tangential distortion parameter for the target look-up table may be determined based on a difference between an original reference image and an image input to a camera positioned at a target position with respect to an image output device. According to an embodiment of the present disclosure, the target look-up table may be associated with the target position.

According to an embodiment of the present disclosure, the at least one processor may be configured to execute the one or more instructions to cause the electronic device to identify a vector corresponding to the coordinates of the first pixel by using the target look-up table. According to an embodiment of the present disclosure, the at least one processor may be configured to execute the one or more instructions to cause the electronic device to determine the coordinates of the second pixel based on an operation of subtracting the identified vector from the coordinates of the first pixel.

According to an embodiment of the present disclosure, the at least one processor may be configured to execute the one or more instructions to cause the electronic device to identify the coordinates of the second pixel corresponding to the coordinates of the third pixel by using the target look-up table. According to an embodiment of the present disclosure, data of the second pixel in the predistorted image may be determined based on data of the first pixel and data of the third pixel in the target image.

According to an embodiment of the present disclosure, the at least one processor may be configured to execute the one or more instructions to cause the electronic device to identify user's viewing position information. According to an embodiment of the present disclosure, the at least one processor may be configured to execute the one or more instructions to cause the electronic device to identify user's viewing position information.

According to an embodiment of the present disclosure, the user's viewing position information may be position information of 6-degree of freedom (6-DOF).

According to an embodiment of the present disclosure, the at least one processor may be configured to execute the one or more instructions to cause the electronic device to identify a resolution of an original image. According to an embodiment of the present disclosure, the at least one processor may be configured to execute the one or more instructions to cause the electronic device to generate a target image having the same resolution as the resolution of the target look-up table from the original image based on the resolution of the original image being different from the resolution of the target look-up table.

According to an embodiment of the present disclosure, the electronic device may include memory storing one or more instructions and at least one processor configured to execute the one or more instructions stored in the memory. According to an embodiment of the present disclosure, the at least one processor may be configured to execute the one or more instructions to cause the electronic device to identify a value of a scaling parameter associated with an image output size. According to an embodiment of the present disclosure, the at least one processor may be configured to execute the one or more instructions to cause the electronic device to calculate the coordinates of the second pixel corresponding to the coordinates of the first pixel based on the value of the scaling parameter. According to an embodiment of the present disclosure, the at least one processor may be configured to execute the one or more instructions, and thus the electronic device may be configured to execute the one or more instructions to calculate a vector corresponding to the first pixel based on the coordinates of the first pixel and the coordinates of the second pixel. According to an embodiment of the present disclosure, the at least one processor may be configured to execute the one or more instructions, and thus the electronic device may be configured to execute the one or more instructions to generate a look-up table for generating a predistorted image for a target image based on the calculated vector.

According to an embodiment of the present disclosure, the at least one processor may be configured to execute the one or more instructions to cause the electronic device to include calculating a vector corresponding to the first pixel based on an operation of subtracting the coordinates of the second pixel from the coordinates of the first pixel.

According to an embodiment of the present disclosure, the value of the scaling parameter may be determined based on at least one of a distance between the image output device and the viewing position or a display resolution.

According to an embodiment of the present disclosure, the at least one processor may execute the one or more instructions to cause the electronic device to identify a value of a radial distortion parameter and a value of a tangential distortion parameter. According to an embodiment of the present disclosure, the at least one processor may be configured to execute the one or more instructions to cause the electronic device to calculate the coordinates of the second pixel based on the value of the scaling parameter, the value of the radial distortion parameter, and the value of the tangential distortion parameter.

According to an embodiment of the present disclosure, at least one of the value of the scaling parameter, the value of the radial distortion parameter, or the value of the tangential distortion parameter may be determined based on a difference between an original reference image and an image input to a camera positioned at a target viewing position with respect to an image output device. According to an embodiment of the present disclosure, the look-up table may be associated with the target viewing position.

According to an embodiment of the present disclosure, the at least one processor may be configured to execute the one or more instructions to cause the electronic device to generate a plurality of look-up tables for a plurality of viewing positions.

A program for performing a method of generating a predistorted image according to an embodiment of the present disclosure may be recorded on a computer-readable recording medium. A program for performing a method of generating a look-up table according to an embodiment of the present disclosure may be recorded on a computer-readable recording medium.

A device-readable storage medium may be provided in the form of a non-transitory storage medium. Here, the term 'non-transitory storage medium' simply means a tangible device that does not contain a signal (e.g. electromagnetic wave), and the term does not distinguish between cases in which data is stored semi-permanently or temporarily in a storage medium. For example, the 'non-transitory storage medium' may include a buffer in which data is temporarily stored.

According to an embodiment, methods according to various embodiments disclosed in the present disclosure may be provided as provided in a computer program product. The computer program product may be traded between a seller and a buyer as commodities. The computer program product may be distributed in the form of a machine-readable storage medium (e.g., compact disc read only memory (CD-ROM)), or may be distributed online (e.g., by download or upload) via an application store or directly between two user devices (e.g., smartphones). In the case of online distribution, at least some of computer program products (e.g., a downloadable application) may be temporarily stored or temporarily generated in a device-readable storage medium, such as memory of a server of a manufacturer, a server of an application store, or an intermediary server.

**Claims**

1. A method performed by an electronic device, the method comprising:

   identifying a target image (440, 710) including a plurality of pixels;
   identifying coordinates of a second pixel corresponding to coordinates of a first pixel by using a target look-up table (432, 610) generated based on a scaling parameter associated with an image output size;
   generating a predistorted image (460, 720) based on data of the first pixel of the target image (440, 710) and the coordinates of the second pixel; and

outputting the predistorted image (460, 720),

wherein data of the second pixel in the predistorted image (460, 720) is determined based on the data of the first pixel in the target image (440, 710).

2. The method of claim 1, wherein a value of the scaling parameter is determined based on at least one of a distance between an image output device and a viewing position or a display resolution.

3. The method of claim 1 or 2, wherein the target look-up table (432, 610) is generated based on a radial distortion parameter and a tangential distortion parameter.

4. The method of any one of claims 1 to 3, wherein at least one of the value of the scaling parameter, a value of a radial distortion parameter, or a value of a tangential distortion parameter for the target look-up table (432, 610) is determined based on a difference between an original reference image and an image input to a camera (550) positioned at a target position with respect to an image output device, and

the target look-up table is associated with the target position.

5. The method of any one of claims 1 to 4, wherein the identifying of the coordinates of the second pixel corresponding to the coordinates of the first pixel comprises:

identifying a vector corresponding to the coordinates of the first pixel by using the target look-up table (432, 610); and

determining the coordinates of the second pixel based on an operation of subtracting the identified vector from the coordinates of the first pixel.

6. The method of any one of claims 1 to 5, further comprising identifying the coordinates of the second pixel corresponding to coordinates of a third pixel based on the target look-up table (432, 610),

wherein the data of the second pixel in the predistorted image (460, 720) is determined based on the data of the first pixel and data of the third pixel in the target image (440, 710).

7. The method of any one of claims 1 to 6, further comprising:

identifying user's viewing position information; and

identifying the target look-up table among a plurality of look-up tables based on the user's viewing position information.

8. The method of any one of claims 1 to 7, wherein the user's viewing position information is position information of 6-degree of freedom (6-DOF).

9. The method of any one of claims 1 to 8, further comprising:

identifying a resolution of an original image; and

generating the target image (440, 710) having a same resolution as a resolution of the target look-up table (432, 610) from the original image based on the resolution of the original image being different from the resolution of the target look-up table (432, 610).

10. An electronic device comprising:

memory storing one or more instructions; and

at least one processor configured to execute one or more instructions stored in the memory,

wherein the at least one processor is configured to execute the one or more instructions to cause the electronic device to:

identify a target image (440, 710) including a plurality of pixels,

identify coordinates of a second pixel corresponding to coordinates of a first pixel by using a target look-up table (432, 610) generated based on a scaling parameter associated with an image output size,

generate a predistorted image (460, 720) based on data of the first pixel of the target image (440, 710) and the coordinates of the second pixel, and

output the predistorted image (460, 720), and
data of the second pixel in the predistorted image (460, 720) is determined based on the data of the first pixel in the target image (440, 710).

11. The electronic device of claim 10, wherein a value of the scaling parameter is determined based on at least one of a distance between an image output device and a viewing position or a display resolution.

12. The electronic device of any one of claim 10 or 11, wherein the target look-up table (432, 610) is generated based on a radial distortion parameter and a tangential distortion parameter.

13. The electronic device of any one of claims 10 to 12, wherein the at least one processor is configured to execute the one or more instructions to cause the electronic device to:

identify a vector corresponding to the coordinates of the first pixel by using the target look-up table (432, 610), and
determine the coordinates of the second pixel based on an operation of subtracting the identified vector from the coordinates of the first pixel.

14. The electronic device of any one of claims 10 to 13, wherein the at least one processor is configured to execute the one or more instructions to cause the electronic device to:

identify user's viewing position information, and
identify the target look-up table (432, 610) among a plurality of look-up tables based on the user's viewing position information.

15. The electronic device of any one of claims 10 to 14, wherein the at least one processor is configured to execute the one or more instructions to cause the electronic device to:

identify the coordinates of the second pixel corresponding to coordinates of a third pixel based on the target look-up table (432, 610), and
the data of the second pixel in the predistorted image (460, 720) is determined based on the data of the first pixel and data of the third pixel in the target image (440, 710).

# FIG. 1A

RADIAL DISTORTION
: CURVATURE DIFFERENCE
  BETWEEN DISPLAY AND LENS

110    120

# FIG. 1B

TANGENTIAL DISTORTION
: INCLINATION DIFFERENCE
  BETWEEN DISPLAY AND LENS

110    120

# FIG. 1C

DISTANCE DIFFERENCE
BETWEEN LENS AND VIEWER

120                    130

# FIG. 2

VIEWING POSITION INFORMATION — 210

IDENTIFY VALUE OF DISTORTION PARAMETER — 220

GENERATE PREDISTORTION COORDINATES — 230

TARGET IMAGE — 240

APPLY PREDISTORTION COORDINATES AND INTERPOLATION PROCESSING — 250

SCALED PREDISTORTED IMAGE — 260

(x,y)     $f(\cdot)$     (u,v)

EP 4 756 703 A1

# FIG. 3

310
TARGET IMAGE

2160

3840

BARREL
DISTORTION

320
BARREL PREDISTORTED IMAGE

2160 + a

3840 + b

DOWNSCALING

330
SCALED PREDISTORTED IMAGE

2160

3840

# FIG. 4

DISPLAY RESOLUTION ⌐400

VIEWING POSITION INFORMATION ⌐410

IDENTIFY VALUE OF DISTORTION PARAMETER AND VALUE OF SCALING PARAMETER ⌐420

GENERATE LOOK-UP TABLE ⌐430

TARGET IMAGE ⌐440

MAPPING OPERATION ⌐450

PREDISTORTED IMAGE ⌐460

⌐432
LOOK-UP TABLE

| (s, t) | 0 | 1 | ⋯ | W−1 |
|---|---|---|---|---|
| 0 | $(s_{0,0}, t_{0,0})$ | $(s_{1,0}, t_{1,0})$ | ⋯ | $(s_{W-1,0}, t_{W-1,0})$ |
| 1 | $(s_{0,1}, t_{0,1})$ | $(s_{1,1}, t_{1,1})$ | ⋯ | $(s_{W-1,1}, t_{W-1,1})$ |
| ⋯ | ⋯ | ⋯ | ⋯ | ⋯ |
| H−1 | $(s_{0,H-1}, t_{0,H-1})$ | $(s_{1,H-1}, t_{1,H-1})$ | ⋯ | $(s_{W-1,H-1}, t_{W-1,H-1})$ |

EP 4 756 703 A1

# FIG. 5

# FIG. 6

$(x,y)$  $\overrightarrow{vector} = (s,t)$  $(u',v')$

$(s,t) = (x,y) - (u',v')$

610

LOOK-UP TABLE    610_1    610_2

| s | 0 | 1 | ⋯ | W−1 |
|---|---|---|---|---|
| 0 | $s_{0,0}$ | $s_{1,0}$ | ⋯ | $s_{W-1,0}$ |
| 1 | $s_{0,1}$ | $s_{1,1}$ | ⋯ | $s_{W-1,1}$ |
| ⋯ | ⋯ | ⋯ | ⋯ | ⋯ |
| H−1 | $s_{0,H-1}$ | $s_{1,H-1}$ | ⋯ | $s_{W-1,H-1}$ |

| t | 0 | 1 | ⋯ | W−1 |
|---|---|---|---|---|
| 0 | $t_{0,0}$ | $t_{1,0}$ | ⋯ | $t_{W-1,0}$ |
| 1 | $t_{0,1}$ | $t_{1,1}$ | ⋯ | $t_{W-1,1}$ |
| ⋯ | ⋯ | ⋯ | ⋯ | ⋯ |
| H−1 | $t_{0,H-1}$ | $t_{1,H-1}$ | ⋯ | $t_{W-1,H-1}$ |

# FIG. 7

$$(s,t) = (s_{x,y}, t_{x,y})$$

LOOK-UP TABLE — 610_1 — 610_2 — 610

| s | 0 | 1 | ... | W−1 |
|---|---|---|-----|-----|
| 0 | $s_{0,0}$ | $s_{1,0}$ | ... | $s_{W-1,0}$ |
| 1 | $s_{0,1}$ | $s_{1,1}$ | ... | $s_{W-1,1}$ |
| ... | ... | ... | ... | ... |
| H−1 | $s_{0,H-1}$ | $s_{1,H-1}$ | ... | $s_{W-1,H-1}$ |

| t | 0 | 1 | ... | W−1 |
|---|---|---|-----|-----|
| 0 | $t_{0,0}$ | $t_{1,0}$ | ... | $t_{W-1,0}$ |
| 1 | $t_{0,1}$ | $t_{1,1}$ | ... | $t_{W-1,1}$ |
| ... | ... | ... | ... | ... |
| H−1 | $t_{0,H-1}$ | $t_{1,H-1}$ | ... | $t_{W-1,H-1}$ |

$(x,y)$

710

2160

3840

TARGET IMAGE

MAPPING USING LOOK-UP TABLE

$$(u',v') = (x,y) - (s,t)$$

720

2160

3840

PREDISTORTED IMAGE

EP 4 756 703 A1

# FIG. 8

DISPLAY RESOLUTION /800

PLURALITY OF VIEWING POSITIONS /810

820 — IDENTIFY VALUE OF DISTORTION PARAMETER AND VALUE OF SCALING PARAMETER FOR EACH VIEWING POSITION

830 — GENERATE LOOK-UP TABLE FOR EACH VIEWING POSITION

840 — TARGET IMAGE

850 — USER'S VIEWING POSITION INFORMATION

860 — MAPPING OPERATION

870 — PREDISTORTED IMAGE

EP 4 756 703 A1

# FIG. 9

```
                                              ╭─ 900
                  ┌─────────┐              ⌇
                  │  START  │
                  └────┬────┘

   ┌──────────────────────────────────────┐
   │ IDENTIFY TARGET IMAGE INCLUDING        │─── 910
   │ PLURALITY OF PIXELS                    │
   └──────────────────┬─────────────────────┘

   ┌──────────────────────────────────────┐
   │ IDENTIFY COORDINATES OF SECOND PIXEL   │
   │ CORRESPONDING TO COORDINATES OF FIRST  │─── 920
   │ PIXEL BY USING TARGET LOOK-UP TABLE    │
   │ GENERATED BASED ON SCALING PARAMETER   │
   └──────────────────┬─────────────────────┘

   ┌──────────────────────────────────────┐
   │ GENERATE PREDISTORTED IMAGE BASED ON   │
   │ DATA OF FIRST PIXEL OF TARGET IMAGE AND│─── 930
   │ COORDINATES OF SECOND PIXEL            │
   └──────────────────┬─────────────────────┘

   ┌──────────────────────────────────────┐
   │ OUTPUT PREDISTORTED IMAGE              │─── 940
   └──────────────────┬─────────────────────┘

                  ┌─────────┐
                  │   END   │
                  └─────────┘
```

# FIG. 10

START

1000

IDENTIFY VALUE OF SCALING PARAMETER ASSOCIATED WITH IMAGE OUTPUT SIZE — 1010

CALCULATE COORDINATES OF SECOND PIXEL CORRESPONDING TO COORDINATES OF FIRST PIXEL BASED ON VALUE OF SCALING PARAMETER — 1020

CALCULATE VECTOR CORRESPONDING TO FIRST PIXEL BASED ON COORDINATES OF FIRST PIXEL AND COORDINATES OF SECOND PIXEL — 1030

GENERATE LOOK-UP TABLE BASED ON CALCULATED VECTOR — 1040

END

# FIG. 11

ELECTRONIC DEVICE 1110

PROCESSOR 1112

MEMORY 1114

ELECTRONIC DEVICE 1120

PROCESSOR 1122

MEMORY 1124

## INTERNATIONAL SEARCH REPORT

International application No.

**PCT/KR2024/012046**

### A. CLASSIFICATION OF SUBJECT MATTER

**G06T 3/18**(2024.01)i; **G06T 7/73**(2017.01)i; **G06T 3/40**(2006.01)i; **G06T 3/14**(2024.01)i

According to International Patent Classification (IPC) or to both national classification and IPC

### B. FIELDS SEARCHED

Minimum documentation searched (classification system followed by classification symbols)

G06T 3/18(2024.01); G09G 3/20(2006.01); H03K 19/177(2006.01); H04N 13/00(2006.01); H04N 13/20(2018.01); H04N 5/225(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 대상 이미지(target image), 선왜곡 이미지(pre-distorted image), 룩 업 테이블(look-up table), 스케일링 파라미터(scaling parameter), 래디얼 왜곡 파라미터(radial distortion parameter), 탄젠셜 왜곡 파라미터(tangential distortion parameter), 시청 위치 정보(viewing location information)

### C. DOCUMENTS CONSIDERED TO BE RELEVANT

| Category* | Citation of document, with indication, where appropriate, of the relevant passages | Relevant to claim No. |
|---|---|---|
| Y | KR 10-2019-0061680 A (LG DISPLAY CO., LTD.) 05 June 2019 (2019-06-05)<br>See paragraphs [0007], [0009], [0014] and [0075]; and claims 8-9. | 1-15 |
| Y | KR 10-2019-0057991 A (SAMSUNG ELECTRONICS CO., LTD.) 29 May 2019 (2019-05-29)<br>See paragraphs [0043], [0100] and [0105]; and claims 1-2. | 1-15 |
| Y | KR 10-2017-0118609 A (CENTER OF HUMAN-CENTERED INTERACTION FOR COEXISTENCE) 25 October 2017 (2017-10-25)<br>See claim 15. | 5-6,13,15 |
| Y | KR 10-2019-0136057 A (GOOGLE LLC) 09 December 2019 (2019-12-09)<br>See paragraphs [0002] and [0064]. | 7-8,14 |
| A | KR 10-2014-0132575 A (SHIM, Young Serk) 18 November 2014 (2014-11-18)<br>See paragraphs [0020]-[0021]. | 1-15 |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **18 November 2024** | **18 November 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/012046**

| Patent document cited in search report | | | Publication date (day/month/year) | Patent family member(s) | | | Publication date (day/month/year) |
|---|---|---|---|---|---|---|---|
| KR | 10-2019-0061680 | A | 05 June 2019 | CN | 109841182 | A | 04 June 2019 |
| | | | | CN | 109841182 | B | 01 July 2022 |
| | | | | KR | 10-2467882 | B1 | 16 November 2022 |
| | | | | US | 10726530 | B2 | 28 July 2020 |
| | | | | US | 2019-0164260 | A1 | 30 May 2019 |
| KR | 10-2019-0057991 | A | 29 May 2019 | CN | 109817139 | A | 28 May 2019 |
| | | | | CN | 109817139 | B | 18 July 2023 |
| | | | | KR | 10-2473840 | B1 | 05 December 2022 |
| | | | | US | 10580118 | B2 | 03 March 2020 |
| | | | | US | 2019-0156466 | A1 | 23 May 2019 |
| KR | 10-2017-0118609 | A | 25 October 2017 | KR | 10-1870865 | B1 | 26 June 2018 |
| | | | | US | 10650602 | B2 | 12 May 2020 |
| | | | | US | 2019-0080517 | A1 | 14 March 2019 |
| KR | 10-2019-0136057 | A | 09 December 2019 | CN | 110494827 | A | 22 November 2019 |
| | | | | CN | 110494827 | B | 22 September 2023 |
| | | | | EP | 3619596 | A1 | 11 March 2020 |
| | | | | EP | 3619596 | B1 | 01 September 2021 |
| | | | | JP | 2020-518808 | A | 25 June 2020 |
| | | | | JP | 7049364 | B2 | 06 April 2022 |
| | | | | KR | 10-2335908 | B1 | 06 December 2021 |
| | | | | US | 10444865 | B2 | 15 October 2019 |
| | | | | US | 2018-0314346 | A1 | 01 November 2018 |
| | | | | WO | 2018-204219 | A1 | 08 November 2018 |
| KR | 10-2014-0132575 | A | 18 November 2014 | KR | 10-1465112 | B1 | 25 November 2014 |

Form PCT/ISA/210 (patent family annex) (July 2022)